# EUROPÄISCHE PATENTSCHRIFT

(11) **EP 2 669 258 B1**
(45) Veröffentlichungstag und Bekanntmachung des Hinweises auf die Patenterteilung: **18.04.2018**
(21) Anmeldenummer: 13169013.3
(22) Anmeldetag: 23.05.2013
(51) Int. Cl.: C03B 9/195, C03B 9/18, C03B 9/19, C03B 9/22, C03B 40/027, C03B 9/36, C03B 9/38, C03B 9/40

(54) **VORRICHTUNG ZUR HERSTELLUNG VON HOHLKÖRPERN AUS EINER GLASSCHMELZE**
APPARATUS FOR PRODUCING HOLLOW GLASSWARE FROM A GLASS MELT
APPRAREIL POUR PRODUIRE DES ARTICLES DE VERRE CREUX À PARTIR D'UN VERRE FONDU

(30) Priorität: 29.05.2012 DE 102012104625
(43) Veröffentlichungstag der Anmeldung: 04.12.2013
(73) Patentinhaber: Waltec Maschinen GmbH, 96352 Wilhelmsthal-Steinberg (DE)
(72) Erfinder: Zirfas, Ulrich, 96352 Wilhelmsthal (DE); Bassing, Werner, 96364 Marktrodach (DE); Hofmann, Robert, 96349 Steinwiesen (DE); Hofmann, Ulli, 96367 Tschirn (DE); Wagner, Rainer, 95032 Hof (DE)
(74) Vertreter: LS-MP von Puttkamer Berngruber Loth Spuhler

(56) Entgegenhaltungen:
- DE-C1- 540 095
- US-A- 1 693 069
- US-A- 1 806 731
- US-A- 1 854 753
- US-A- 4 104 046
- US-A- 4 276 075
- US-A- 4 528 015

## Beschreibung

Die Erfindung betrifft eine Vorrichtung, die zur Herstellung von Hohlkörpern aus einer Glasschmelze wenigstens ein, der Formung des Hohlkörpers dienendes Arbeitselement und wenigstens eine, die Vorrichtung versorgende Einrichtung, sowie wenigstens ein Segment aufweist.

Aus der DE 60 2004 008 092 T 2 ist eine Press-Blasmaschine bekannt, die zur Herstellung hohler Glaswaren, Bechergläser oder Weingläser dient. Die Press-Blasmaschine umfasst ein Karussell, das eine Vielzahl von Blasstationen trägt, von denen jede zum Aufnehmen von Vorformen ausgebildet ist. Die Press-Blasmaschine umfasst weiterhin einen Vorformhalter zur Aufnahme eines Glasrohlings, einen Halsring zum Halten des Glasrohlings und eine Antriebseinrichtung, die dazu dient, eine formgebende Einheit aus einer Stillstandsposition in einen Transferbereich zu versetzen.

Der nächstliegende Stand der Technik ist die US 4,276,075 A und offenbart eine Maschine zur Hohlglasherstellung mit einem Karussell zur Herstellung der Glaskörper. Auf einem Karussell der Maschine sind Pumpen zur Zirkulation von Kühlmittel und zur Bereitstellung von Druckluft angeordnet.

Bekannte Maschinen zur Glasherstellung weisen in der Regel Karussells auf, die mit einem, oder mit einer Mehrzahl von Segmenten ausgestattet sind. Bei einem Umlauf des wenigstens einen Karussells wird wenigstens ein Glastropfen aus einer Glasschmelze über wenigstens eine Zuführungseinrichtung, vorzugsweise über wenigstens eine Zuführungsrinne, wenigstens einer Vorform zugeführt.

In der vorliegenden Erfindung wird für den Begriff der Sektion auch der Begriff des Segmentes verwendet.

Diese bekannten Maschinen weisen in der Regel ein, eine Grundplatte umfassendes Karussell mit kreisringförmig angeordneten Segmenten auf. Diese Segmente weisen die für die Herstellung der Hohlkörper erforderlichen Arbeitselemente auf.

Die Vorrichtungen zur Herstellung von Hohlkörpern aus einer Glasschmelze benötigen für die Funktion der Vorrichtung diverse Medien wie zum Beispiel Wasser, Vakuum, Kühlluft, Pressluft oder Schmieröl. Bei bekannten Maschinen zur Glasherstellung wird die Medienübertragung mithilfe von mechanischen Drehüberträgern bewerkstelligt, die äußerst verschleißbehaftet und für den Wartungsfall sehr schwer zugänglich sind.

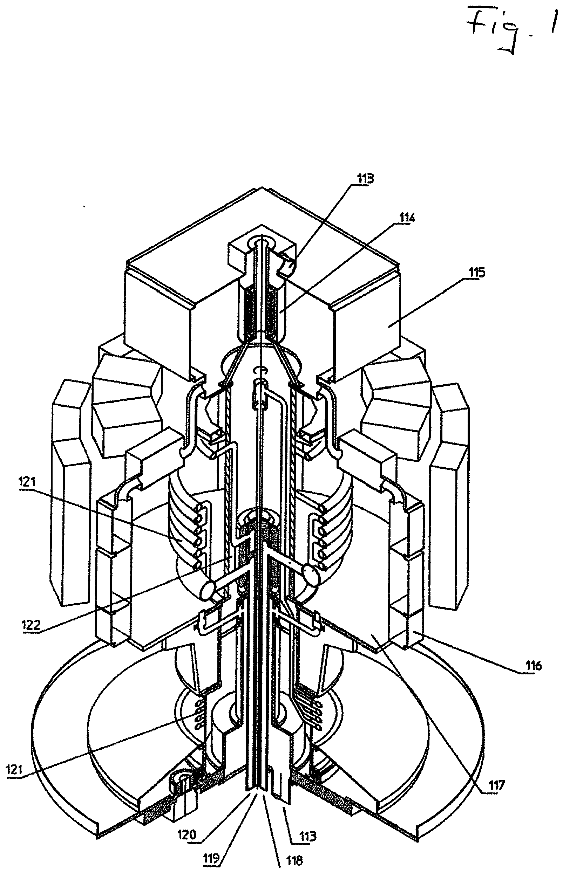

Die vorerwähnten Medien, werden dabei über stationäre, ausserhalb des Karussells angeordnete Leitungen in der Regel in der Mitte des Karussells angeordneten Drehübertragern zugeführt, wie die Prinzipskizze der Figur 1 anschaulich zeigt.

Fig. 1 zeigt einen Drehübertrager 122, der bei bekannten Vorrichtungen zur Herstellung von Hohlkörpern, die zur Produktion der Hohlkörper erforderlichen Medien wie Wasser 119, Druckluft 118; 120 sowie Gebläseluft 113 bereitstellt. Senkrecht zu einer Grundplatte 117 des Karussells werden die Medien von einem Fuß des Drehübertragers 122 Verteilerrohren 121 zugeführt, die die Medien den Verbrauchern innerhalb der Vorrichtung zuführen. Im Bereich eines Schaltschrankes 115 sind elektrische Schleifringübertrager 114 dargestellt.

Die Schleifringübertrager 114 sind für die Zufuhr von elektrischer Energie sowie zur Sicherstellung sicherheitsrelevanter Steuerspannung erforderlich. Die Drehüberträger 122 sind im Stand der Technik im Zentrum der Vorrichtung zur Herstellung von Hohlkörpern angeordnet. Zur Verhinderung von Kurzschlüssen sind die Flüssigkeitsleitungen räumlich vertikal unterhalb stromführender Bauteile 114 geführt. Aufgrund ihrer begrenzten Lebensdauer müssen die elektrischen Schleifringübertrager 114 und andere Stromabnehmer jedoch in regelmäßigen Abständen ausgetauscht werden. Hierfür ist eine komplette Demontage betroffener Bauteile erforderlich. Betroffen sind zum Beispiel der Schaltschrank 115, die Bedienelemente 116 und die Medienverteilerrohre 121.

An bekannten Glasmaschinen sind die zur Glasherstellung erforderlichen Arbeitselemente vorgesehen. Vor dem Hintergrund der vorliegenden Erfindung bezeichnet der Begriff Arbeitselemente wenigstens eine kombinierte Press-Blaseinrichtung, wenigstens eine Vorform, wenigstens eine Presseinrichtung, wenigstens eine Blaseinrichtung, wenigstens einen Neckring und wenigstens einen Plunger. Zusätzlich bezieht sich der Begriff auf wenigstens eine Bodenstation sowie wenigstens eine Fertigform.

Die bekannten Maschinen zur Glasherstellung erweisen sich als nachteilig, da die einzelnen Baugruppen innerhalb des Press-Blas-Mechanismus verschleißbehaftet sind.

Die Formung eines Hohlkörpers bei einem Press-Blasverfahren erfolgt in der Weise, dass zunächst der Kölbel hergestellt wird. Dies geschieht typischer Weise dadurch, dass der Glastropfen mit Hilfe der wenigstens einen Presseinrichtung unter Zusammenwirken von Vorform, Neckring und Plunger zum Kölbel gepresst wird. In einem sich daran anschließenden Verfahrensteilakt wird der Kölbel mittels der Blaseinrichtung unter deren Zusammenwirkung mit Neckring, Fertigform und Boden zum Hohlkörper geformt. Presseinrichtung und Blaseinrichtung können in einem Maschinenbauteil kombiniert angeordnet sein.

Bei einem Umlauf des Karussells der Maschinen zur Herstellung von Glaskörpern wird ein Tropfen aus einer Glasschmelze über eine Zuführungseinrichtung einer Vorform zugeführt. Die Vorform steht dabei regelmäßig mit einer der Formung des Hohlkörpers dienenden Einrichtung, insbesondere einer Presseinrichtung, einem Neckring sowie einer Blaseinrichtung in Zusammenhang. Die Formung eines Hohlkörpers aus einer Glasschmelze erfolgt in der Weise, dass zunächst der Kölbel hergestellt wird. Dies geschieht dadurch, dass der Glastropfen im Zusammenwirken mit der sogenannten Vorform, Neckring und einem sogenannten Plunger zum Kölbel gepresst wird. In einem sich daran anschließenden Verfahrensteilakt wird der Kölbel mittels der Blaseinrichtung unter deren Zusammenwirken mit Neckring, sogenanntem Boden und Fertigform zum Hohlkörper geformt.

Dabei kann der sogenannte Boden durch einen vordefinierten Bewegungsablauf unter den Kölbel bewegt werden. Durch die vertikale Bewegung des Bodens unter dem sich durch Schwerkraft auslängenden Kölbel kann die Formung der Hohlkörper beeinflusst werden. Weiterhin erfolgt die Fertigformung des Hohlkörpers durch eine Blaseinrichtung.

Bei den bekannten Vorrichtungen zur Herstellung von Glaskörpern werden zur Bewegung der Vorform in der Regel großvolumige Zylinder eingesetzt, welche die Vorform vertikal zwischen einer ersten Endstellung, nämlich der Tropfenzuführungsposition, und einer zweiten Endstellung, nämlich der Pressposition, bewegen. Diese großvolumigen Zylinder haben durch die eingesetzte Pressluft einen sehr hohen Energieverbrauch.

Eine integrierte Kurvenmechanik verschwenkt dabei die Vorform zwischen der Tropfenzuführungsposition und der Pressposition. Um zufriedenstellende Produktionsergebnisse zu erzielen, müssen bei bekannten Vorrichtungen zur Herstellung von Glaskörpern diese Endstellungen exakt angefahren werden. Hierzu werden feste und einstellbare formschlüssige Führungen und Zentrierungen eingesetzt. Es ist gleichermaßen von Bedeutung, dass die Endstellungen weich angefahren werden. Bekannte großvolumige pneumatische Zylinder verfügen über nicht ausreichende Dämpfungseigenschaften, um die Positionen weich anzufahren.

Um dies zu erreichen, werden in der Regel ölhydraulische Dämpfungselemente verwendet, die ihrerseits kostenintensiv und störanfällig sind, die aber bei notwendig werdenden Reparaturen bzw. Einstellungen schwer zugänglich sind.

Der Einsatz großvolumiger pneumatischer Zylinder erweist sich als nachteilig, da sich aufgrund der stetig ändernden Reibung, der erforderlichen Schmierung sowie des Verschleißes an Dichtungs- und Führungselementen die Zylindergeschwindigkeit und damit die verbundene kinetische Energie der vom Zylinder bewegten Masse ständig verändert. Es ist daher erforderlich, neben der Korrektur der Geschwindigkeit auch die Einstellung der hydraulischen Dämpfer zu verändern.

Eine regelmäßige Nachjustierung der Einstellungen ist aufgrund des Verschleißes auch an den Führung und Zentrierungen erforderlich. Bei bekannten Vorrichtungen zur Glasherstellung ist die Justierung der Einstellung bei laufendem Betrieb jedoch nicht möglich. Teilweise sind die einzustellenden Elemente ohne Demontage von Abdeckungen überhaupt nicht zugänglich. Überdies erfordert die Demontage der Abdeckungen die Stillsetzung der Maschine. Der Zeitdruck, die Maschine möglichst schnell wieder in Betrieb zu nehmen, führt zu einem weiteren Gefährdungspotential.

Die bei derartigen Vorrichtungen seit Jahrzehnten eingesetzten großvolumigen pneumatischen Zylinder erweisen sich schädlich für die Umwelt und die Maschinenbediener. Zur Reduzierung des Verschleißes erfordern sie eine intensive Schmierung mit Schmieröl. Ein Großteil des zugeführten Schmieröls wird durch den zyklischen Austausch der Luft mit der Umgebung wieder der Umgebungsluft zugeführt. Die Luft, die der Maschinenbediener einatmet, ist daher kontinuierlich durch Schmieröl kontaminiert. Stäube und abrasive Verlustanteile an eingesetzten Materialien sowie Ablagerungen an den Maschinen sind an diesen Vorrichtungen erfahrungsgemäß hoch. Verbindungen aus Ablagerungen und ölhaltiger Luft, die von den Zylindern ausgestoßen werden, ergeben ein hohes Unfallgefährdungspotential durch Rutschgefahr und sind darüber hinaus sehr leicht entzündlich.

Bei bekannten Vorrichtungen wird zudem versucht, die Lageorientierung (Winkel) der Vorform in der Tropfenzuführungsposition und in der Pressposition durch Gleitführungen zu realisieren. Die Gleitführungen unterliegen aufgrund ihres Wirkprinzips erhöhtem Verschleiß und sind daher sehr wartungsintensiv. Prinzipiell umfassen die Gleitführungen mindestens zwei Bauelemente (sog. Nut und Feder). Mindestens ein Bauelement greift dabei in das zweite Bauelement ein. Bekanntermaßen ist Feder fest am Vorform-Träger montiert und bewegt sich gemeinsam mit der Vorform in einer Schwenk-und Höhenbewegung. Die Nut ist am Gehäuse des VorformTrägermechanismus befestigt und ist in seiner Position ortsfest in Bezug auf die Vorform und den Vorform-Träger. Bei der Höhen-und Schwenkbewegung fährt die Feder in die Nut ein. Beide Bauteile sind zueinander in Bezug auf ihre Maße toleriert, wodurch die Lage der Vorform in den Arbeitspositionen exakt bestimmt ist. Durch die engen Toleranzen dieser beiden Bauteile (Nut und Feder), welche gleitend ineinander verfahren, entsteht hoher Verschleiß. Hierdurch vergrößern sich bei Einsatz derartiger Gleitführungen die Toleranzen abermals, wodurch die Lagegenauigkeit, nämlich die Mitte der Vorform gegenüber der Tropfenzuführungseinrichtung und gegenüber der Presseinrichtung, erheblich sinkt.

In vorbekannten Maschinen zur Glasherstellung werden Plunger eingesetzt. Der Plunger ist ein Bauteil, mit dem der Glastropfen im Hohlraum zwischen Vorform und Neckring zum Kölbel umgeformt wird. Der Neckring ist zwischen Plunger und Vorform angeordnet; seine Funktion ist es, den Vorformling bzw. den Kölbel für den Zeitraum von der Vorformung bis zur Entnahme des Hohlkörpers durch den Takeout aufzunehmen und zu transportieren.

Andere bekannte Vorrichtungen zur Glasherstellung sehen großvolumige pneumatische Zylinder vor, um den Plunger in eine vertikale Bewegung zu versetzen. Das obere Ende des Zylinders bestimmt dabei die obere fixe Stellung des Plungers. Eine untere Endstellung des Plungers wird im Produktionszyklus durch den Widerstand der in der Vorform befindlichen Glasschmelze bestimmt. Neben dem Widerstand der Glasschmelze sind für die untere Endstellung des Plungers das Volumen der Vorform sowie die in der Vorform befindliche Glasmenge entscheidend.

Bei weiteren bekannten Vorrichtungen zur Herstellung von Glaskörpern werden auch zur Bewegung des Plungers in der Regel großvolumige Zylinder eingesetzt, welche den Plunger bewegen. Diese großvolumigen Zylinder haben durch die eingesetzte Pressluft einen sehr hohen Energieverbrauch.

Der Einsatz großvolumiger pneumatischer Zylinder im Zusammenhang mit diesem Plunger erweist sich als nachteilig.

Es gelten hierzu dieselben Gründe, die oben in Bezug auf die Vorform dargestellt wurden.

Bei bekannten Vorrichtungen zur Herstellung von Hohlkörpern wird die vom pneumatischen Zylinder ausgehende Kraft nicht direkt auf den Plunger übertragen. Die Kraft wird vielmehr mithilfe einer einstellbaren Druckfeder bestimmt, die Teil eines Hebelmechanismus ist. Die auf den Plunger wirkende Kraft wird durch die Vorspannung der Druckfeder bestimmt. Mithilfe der Vorspannung kann die auf die Glasschmelze wirkende Kraft des Plungers vermindert und erhöht werden. Es erweist sich als nachteilig, dass die Verstellung der Vorspannung nicht skaliert ist. Überdies ist sie in späteren Arbeitsgängen nicht reproduzierbar. Zur Verstellung der Vorspannung ist bisher vielfach zunächst eine Kontermutter zu lösen. In einem zweiten Schritt wird eine weitere Mutter verstellt, über die die Vorspannung einstellbar ist. Wenn eine zufriedenstellende Veränderung der Vorspannung erreicht ist, wird die Einstellung durch Anziehen der Kontermutter fixiert und gesichert.

Aufgrund der hohen Umlaufgeschwindigkeit, mit der die Maschine zur Glasherstellung rotiert, ist die Verstellung der Vorspannung der Druckfeder bei bekannten Maschinen mit einem hohen Gefährdungspotenzial verbunden. Die Ausbildung und die Anordnung des Verstellmechanismus an der Maschine führen zu einem hohen Unfallrisiko. Es besteht die Gefahr, dass die mit der Einstellung der Vorspannung beschäftigten Arbeiter mit ihren Handschuhen oder ihrer Kleidung oder insbesondere mit ihren Gliedmaßen bzw. Haaren am Verstellmechanismus hängen bleiben und von der Maschine mitgezogen werden.

An bisher verwendeten Maschinen sind weitere pneumatische Zylinder bekannt, die zu den vorgenannten großvolumigen, pneumatischen Zylindern koaxial angeordnet sind. Mithilfe des weiteren Zylinders kann der Plunger zum Ein- und Ausbau relativ zum weiteren Zylinder nach unten aus einem Neckringgehäuse herausgefahren werden.

Ein weiterer Nachteil an den bekannten Plungervorrichtungen besteht darin, dass der Plunger mithilfe des großvolumigen pneumatischen Zylinders lediglich eine obere und eine untere Endstellung anfahren kann. Alternative Zwischenpositionen zwischen der oberen und der unteren Endstellung sind nach bekannten Konstruktionskonzepten nicht ansteuerbar.

Eine weitere Schwachstelle bekannter Vorrichtungen zur Herstellung von Hohlkörpern aus einer Glasschmelze offenbart sich aus dem Funktionszusammenhang zwischen dem Plungermechanismus und dem Neckringmechanismus. Der Neckring ist zwischen Plunger und Vorform angeordnet; seine Funktion ist es, den Vorformling bzw. Kölbel für den Zeitraum von der Formung bis zur Entnahme des Hohlkörpers durch den Takeout aufzunehmen. Bisher wird der bekannte Blaskopf-Mechanismus ferner durch ein ebenfalls bekanntes Neckringgehäuse ersetzt, das eine geschlossene Bauweise aufweist. Der Einsatz geschlossener Neckringgehäuse führt zu einer Kapselung des Plungers. Hierdurch kann der Plunger vergleichsweise weniger Wärme nach außen abgeben. Die Möglichkeit, den Plunger mit Hilfe stationärer Luftkühldüsen gezielt von außen anzublasen und auf diese Weise zu kühlen, ist nicht mehr gegeben.

Alternativ wird bei bekannten Vorrichtungen zur Herstellung von Hohlkörpern aus einer Glasschmelze im Neckringgehäuse eine Kühlkammer vorgesehen. Die Kühlkammer ist durch Ausrichtung und Ausprägung der Kühlbohrungen definiert. Die Kühlbohrungen werden von einer einzigen Kühlluftquelle gespeist. Die Kühlung des Plungers durch eine Kühlkammer erweist sich jedoch als nachteilig, da der Plunger nur in seiner oberen Endstellung gekühlt werden kann. Eine notwendige Veränderung der Anblasstelle erfordert bei bekannten Vorrichtungen den vollständigen Austausch der Kühlkammer.

Je nachdem, an welcher Stelle der Plunger während der Glasherstellung gekühlt werden soll, muss eine Kühlkammer eingesetzt werden, deren Kühlbohrungen entsprechend positioniert und ausgerichtet sind. Eine Veränderung der Ausrichtung der Kühlbohrungen an der eingebauten Kühlkammer ist weiterhin nicht möglich. Zum Auswechseln der Kühlkammer muss die Maschine stillgesetzt werden. Die Temperatur der Maschine und der zur Glasherstellung eingesetzten Werkzeuge müssen vor dem Austausch unter die Betriebstemperatur abgesenkt werden. Nach Austausch der Kühlkammer muss die Maschine erst wieder angefahren und auf ihre Betriebstemperatur gebracht werden, um Glasprodukte in der gewünschten Qualität produzieren zu können.

Auch beim Austausch der Kühlkammern beruht die Ausrichtung der Kühlbohrungen auf dem Prinzip Trial and Error. Es ist nicht gewährleistet, dass die jeweils eingebaute Kühlkammer den Plunger in der gewünschten Position und an der entsprechenden Stelle kühlt. Der Anpassungsvorgang muss daher zum Teil mehrfach hintereinander vollzogen werden. Geht man davon aus, dass eine Maschine zur Glasherstellung typischerweise 12 oder 18 Sektionen umfasst, muss die Optimierung der Kühlung über den Austausch der Kühlkammer zunächst an einer Sektion durchgeführt werden. Wie oben beschrieben, muss die Prozedur der Anpassung zum Teil mehrmals hintereinander durchgeführt werden. Erst wenn die Kühlung des Plungers an einer Sektion in Bezug auf die Ausrichtung der Kühlbohrungen und auf die Intensität der Kühlung zufriedenstellend ist, können die Kühlkammern der übrigen Sektionen entsprechend angepasst werden. Die Anpassung aller Sektionen der Maschine zur Glasherstellung ist daher mit einem enormen Verlust an Produktionszeit verbunden.

Bei bekannten Vorrichtungen wird während der Formung des Hohlkörpers aus dem Kölbel das durch den Neckring gehaltene Kölbel durch Rotation des Neckrings ebenfalls in Rotation versetzt.

Bekannte Vorrichtungen verwenden hierzu typischer Weise frequenzgesteuerte Antriebe.

Während der Formung des Kölbels und während der Entnahme des Hohlkörpers wird diese Rotation stillgesetzt. Derartige Antriebe gestatten es nicht, dass die Rotation wiederhol-, positionsgenau und zeitlich schnell stillgesetzt wird.

Bekannte Vorrichtungen verwenden zur Verbesserung der Wiederholgenauigkeit und/oder zur Verkürzung der Zeit der Stillsetzung pneumatisch und/oder elektromagnetisch betriebene Kupplungs-Bremskombinationen. Derartig ausgeführte Vorrichtungen sind einem mechanisch hohen Verschleiß unterworfen und benötigen weiter Sensoren welche den Bremsvorgang bei Stillsetzung der Rotation auslösen.

Bei bekannten Vorrichtungen zur Glasherstellung werden Plunger mithilfe einer Gewindeverbindung am Plungermechanismus befestigt. Der Nachteil besteht darin, dass der Maschinenbediener zum Lösen und Festziehen ein Werkzeug benötigt. Zur Bedienung des Werkzeugs benötigt der Maschinenbediener beide Hände. Mit der einen Hand löst er die Verbindung bzw. zieht er die Verbindung fest. Gleichzeitig greift der mit seiner zweiten Hand den Plunger. Die Gefahr besteht nun darin, dass er keine freie Hand zur Verfügung hat, um sich selber abzustützen. Darüber hinaus läuft er Gefahr, sich mit dem heißen Wasser, das sich in der Kühlkammer des Plungers befindet, zu verbrühen. Zum Austausch des Plungers wird die Plungerkühlung abgestellt. Die noch im Plunger gespeicherte Wärme überhitzt das im Plunger befindliche Kühlwasser, welches nach Lösen der Gewindeverbindung aus dem Kühlsystem als heißer Dampf austreten und zu Verbrennungen führen kann.

Des Weiteren verfügen bekannte Glasmaschinen über wenigstens eine Takeout-Einrichtung, die auch als Herausnehmer bezeichnet wird. Diese Takeout-Einrichtung übernimmt von jeweiligen Segmenten des Karussells den geformten Hohlkörper. Sie ist dem Karussell benachbart angeordnet. Beide Maschinensätze greifen ineinander.

Bekannte Karussells weisen, wie eingangs erwähnt und in Fig. 1 beschrieben, Versorgungseinrichtungen in Form von Drehübertragern auf.

Hierbei werden Medien zunächst statisch in der Mitte der Maschine von oben oder unten auf die sogenannte Mittelsäule (Königsbaum) übertragen und dann über radiale Austrittsöffnungen in die drehenden Teile der Übertrager geleitet. Diese Drehübertrager erfordern i.d.R. berührende Dichtungen.
Für fluidische Medien (Wasser, Pressluft, Schmieröle etc.) werden vorwiegend gleitende Dichtelemente, z.B. aus NBR, Teflon oder Viton verwendet. Bedingt durch Karussell- Abmessungen und Gewichte, zur Erzielung einer gewissen Maschinenlaufruhe und bedingt durch die für die Medienübertragung notwendigen Querschnitte ergeben sich große Wellen-Durchmesser, auf denen diese Dichtungen gleiten. Bedingt durch diese vergleichsweise großen Durchmesser erfahren diese Gleitflächen meist keine Oberflächenbehandlung. Entsprechend dieser Durchmesser ergeben sich für diese Dichtungen mit den vollkontinuierlichen Betriebsbedingungen der Maschinen Jahreslaufleistungen von mehreren tausend Kilometern. Diese Dichtungen sind durch Mangelschmierung, Trockenlauf, Kontamination mit abrassiven Stäuben und Umgebungstemperaturen von durchaus 100°C erschwerten Einsatzbedingungen ausgesetzt.

Selbst bei geringstem Verschleiß von bereits einer beteiligten Dichtung kann diese die für das eigene Medium erforderliche Funktion noch erfüllen jedoch durch Leckage das benachbarte Medium oder dessen Übertragung negativ beinträchtigen.
In solchem Fall ist eine Reparatur mit zwangsläufiger Stillsetzung nicht vermeidbar. Derartige Ausfälle sind nicht planbar. Aus all diesen Bedingungen resultieren eine hohe Ausfallhäufigkeit und häufige Reparaturen.

Der Erfindung liegt daher die Aufgabe zu Grunde, eine Vorrichtung zur Herstellung von Hohlkörpern bereitzustellen, bei der die vorgenannten Nachteile weitestgehend ausgeschaltet sind.

Des Weiteren sollen die Arbeitselemente verbessert werden und kostengünstiger hergestellt werden. Sie sollen ferner präziser und umweltverträglicher arbeiten. Die Einheiten aus Segment und Arbeitselementen sollen leicht austauschbar sein.

Des Weiteren ist es Ziel der Erfindung die durch die Verwendung von mechanischen Drehübertragern resultierende Störanfälligkeit der Vorrichtung zur Herstellung von derartigen Hohlkörpern und damit kostspielige Reparaturen zu vermeiden.

Des Weiteren ist es Ziel, die Energieeffizienz zu steigern und die kontinuierlichen Produktionslaufzeiten der Maschinen zu verbessern.

Weiterhin stellt sich die Erfindung zur Aufgabe, eine Vorform, eine Presseinrichtung, eine Blaseinrichtung, ein Neckring, eine Fertigform, eine Press-Blasmaschine in Bezug auf die Effektivität des Produktionsverhältnisses zu verbessern und reproduzierbare Qualität der herzustellenden Hohlkörper zu erhöhen.

Ferner ist das Ziel, Segmente bereitzustellen, die in Bezug auf ihre Versorgung mit den zur Produktion erforderlichen Medien autark von den weiteren Segmenten sind.

Die Aufgabe wird gelöst durch die Merkmale des Anspruchs 1 und des Anspruchs 2.

Die zur Herstellung von Hohlkörpern aus einer Glasschmelze dienende Vorrichtung weist danach wenigstens ein der Formung des Hohlkörpers dienendes Arbeitselement und/oder wenigstens ein Segment und/oder wenigstens eine Versorgungseinrichtung auf, wobei das wenigstens eine Segment und/oder das wenigstens eine Arbeitselement von wenigstens einer sich mit der Grundplatte drehenden Versorgungseinrichtung versorgt wird.

Gleichermaßen ist die Vorrichtung so aufgebaut sein, dass das wenigstens eine Segment selbst eine Trägerstruktur für wenigstens ein Arbeitselement und wenigstens eine Versorgungseinrichtung aufweist.

Vorteilhafte Ausgestaltungen der Erfindung ergeben sich aus den Unteransprüchen.

Sämtliche in der Folge genannten Beispiele sind nur exemplarisch und in keiner Weise ausschließlich gemeint.

Die Erfindung betrifft eine Vorrichtung zur Herstellung von Hohlkörpern aus einer Glasschmelze. Zur Vereinfachung wird davon ausgegangen, dass die Vorrichtung zur Herstellung von Hohlkörpern aus einer Glasschmelze wenigstens ein Karussell aufweist.

Die Vorrichtung umfasst dabei wenigstens ein Arbeitselement und wenigstens eine Versorgungseinrichtung zum Beispiel zur Bereitstellung von Medien wie Wasser, Vakuum, Kühlluft, Pressluft und Strom. Darüber hinaus umfasst die erfindungsgemäße Vorrichtung wenigstens ein Segment.

Die erfindungsgemäße Vorrichtung weist wenigstens ein der Formung des Hohlkörpers dienendes Arbeitselement und/oder wenigstens ein Segment und/oder wenigstens eine Versorgungseinrichtung auf, wobei das wenigstens eine Segment und/oder das wenigstens eine Arbeitselement von wenigstens einer sich mit der Grundplatte drehenden Versorgungseinrichtung versorgt wird.

Die Erfindung ermöglicht hierdurch eine Versorgungseinheit vorzusehen, die in örtlicher Nähe zu den zu versorgenden Verbrauchern auf dem Karussell angeordnet ist. Der Verbraucher kann dabei ein einzelnes Arbeitselement sein oder auch ein Segment, auf dem wenigstens ein Arbeitselement angeordnet ist.

Erfindungsgemäß ist das Segment eine Trägerstruktur für das wenigstens eine Arbeitselement und/oder für die wenigstens eine Versorgungseinrichtung.
Die erfindungsgemäße Vorrichtung erlaubt es, die verschleißbehafteten Medienübertrager, insbesondere in der Form der Drehübertrager, durch Versorgungseinrichtungen zu ersetzen, die nicht mehr zwingend im Bereich der Rotationsachse der Vorrichtung angeordnet sein müssen. Vielmehr können diese auch außermittig angeordnet sein, wodurch ihre Zugänglichkeit erheblich verbessert wird.

Hierdurch werden auch die durch Dichtungsverschleiß resultierenden Nachteile bekannter Maschinen vermieden.

Die wenigstens eine Versorgungseinrichtung befindet sich dabei vorzugsweise zwischen dem wenigstens einen Segment und der Mittelsäule.

Die Erfindung ist unabhängig von der vorstehenden Ausformung gleichermaßen so ausgestaltet, dass ein oder mehrere Arbeitselement(e) und/oder eine oder mehrere Versorgungseinrichtung(en) an dem Segment befestigt sind. Das Segment dient dabei als Trägerstruktur. Durch diese Konstruktion des Segmentes als Trägerstruktur für wenigstens ein Arbeitselement und/oder wenigstens eine Versorgungseinrichtung ist ebenfalls ein einfacher Wechsel/ Wartung dieser Elemente ohne zeitraubende Demontagen möglich.

Bei Beschädigung eines Arbeitselements wird das Segment, das das Arbeitselement trägt, komplett vom Karussell abgenommen und gegen ein Typ-und baugleiches Segment ersetzt. Das beschädigte Arbeitselement kann außerhalb der- und losgelöst von der Glasmaschine repariert werden. Der Vorteil besteht darin, dass der Zeitverlust zur Reparatur des Arbeitselements minimiert werden kann. Die Glasmaschine muss nur kurzfristig, jedoch planbar, angehalten werden. Der Ausbau des Segments, das das beschädigte Arbeitselement enthält, erfolgt zeitgleich mit dem Einbau eines intakten Segments. Die Produktion kann bei minimaler Ausfallzeit umgehend wieder aufgenommen werden.

Wenn die Versorgungseinheit dagegen an der Grundplatte angeordnet ist und und sich mit der Grundplatte mitdreht, hat dies den Vorteil, dass bei einer Leckage von Versorgungsleitungen oder bei sonstigen Beschädigungen der Versorgungseinheit die Versorgungseinheit im ganzen vom Karussell gelöst werden kann.

Ein Segment umfasst z.B wenigstens eine Vorform, wenigstens eine der Formung des Hohlkörpers dienende Einrichtung, eine Presseinrichtung, wenigstens einen Neckring sowie wenigstens eine Blaseinrichtung sowie gegebenenfalls eine Bodenstation auf. Ferner kann die Sektion eine kombinierte Press-Blaseinrichtung aufweisen. Bestandteil der Presseinrichtung ist ein Plunger sowie ein Neckring. Bestandteil der Blaseinrichtung ist u.a. die Fertigform, die aber nicht Gegenstand der vorliegenden Erfindung ist.
Die sich mit der Grundplatte mitdrehende Versorgungseinheit kann dagegen die Pumpe und die die Pumpe mit dem Arbeitselement verbindenden Leitungen umfassen.

Die Erfindung sieht vor, dass das Segment als Trägerstruktur für eines der Arbeitselemente Vorform, Presseinrichtung, Blaseinrichtung, Neckring, Plunger, Bodenstation, Fertigform, Roboter oder Takeout-Einrichtung ausgebildet ist.

Im Zusammenhang mit einer anderen vorteilhaften Ausgestaltung der Erfindung umfasst das einzelne Segment sämtliche Arbeitselemente, die zum Formen von Hohlkörpern aus Tropfen einer Glasschmelze erforderlich sind.

Jedes Segment umfasst eine separate Vorform, die in ihrer Funktion jeweils durch die Zuführungseinrichtung gespeist wird. Gleiches gilt entsprechend für die übrigen vorstehend genannten Arbeitselemente.

Der Einsatz von Robotern erweist sich als vorteilhaft, da der Roboter aufwendige mechanische Baugruppen z.B. Vorformmechanismus, Bodenhubmechanismus und Takeout-Einrichtung vereinfacht. Ein weiterer Vorteil besteht in der einfachen Umschaltung bzw. Änderung des Bewegungsablaufes und einer vergleichsweise schnellen Anpassung an verschiedene Vorformen und Hohlkörperformen.

Durch die Verwendung von Robotern werden darüber hinaus negative Eigenschaften, wie z.B. schlechte Reproduzierbarkeit von pneumatischen Zylindern, deren hoher Verschleiß, damit verbundene Produktionsausfälle und vor allen Dingen die Gefährdung im Arbeitsablauf eliminiert.

Die Roboter werden hierbei elektronisch an den Hauptantrieb der Maschine gekoppelt. Ein weiterer Vorteil besteht in der einfachen Umschaltung bzw. Änderung des Bewegungsablaufes und ein schnelle Anpassung an verschiedene Artikel und Formen.

Bevorzugt ist der wenigstens eine Roboter auf/an dem Segment angeordnet. Der Roboterfuß vollzieht die kontinuierlichen Umlaufbewegungen des Karussells bzw. der Takeout-Einrichtung nach. Die mit dem Segment verbundene Anordnung des Roboters ermöglicht einen einfachen Wechsel des Roboters bzw. eine einfache Wartung ohne zeitraubende Demontage am Karussell.

Nach der Erfindung ist das Segment als Trägerstruktur für mehrere funktionsgleiche Arbeitselemente vorgesehen. Das Segment trägt dabei jeweils mehrere baugleiche oder funktionsgleiche Arbeitselemente.
Zur Konzentrierung mehrerer funktionsgleicher Arbeitselemente können zum Beispiel wenigstens zwei Roboter auf einem Segment angeordnet sein und andere Arbeitselemente benachbarter Segmente bedienen. In Abhängigkeit von der jeweiligen Größe des Segments ist es darüber hinaus möglich, wenigstens zwei Presseeinrichtungen oder wenigstens zwei Blaseinrichtungen auf einem Segment zu konzentrieren.

Zusätzlich ist vorgesehen, dass das Segment als Trägerstruktur für mehrere funktionsverschiedene Arbeitselemente Vorform, Presseinrichtung, Blaseinrichtung, Neckring, Plunger, Bodenstation, Fertigform oder Roboter ausgebildet ist.

Auf einem Segment des Karussells sind jeweils wenigstens zwei in ihrer Funktion sowie nach ihren Aufgaben unterschiedliche Arbeitselemente angeordnet. Ein einzelnes Segment nimmt jeweils sämtliche zur Herstellung von Hohlkörpern aus einer Glasschmelze erforderlichen Arbeitselemente auf.

Erfindungsgemäß ist vorgesehen, dass für den Betrieb der Vorrichtung notwendige fluide Medien durch mit der Grundplatte rotierende Versorgungseinrichtung(en) bereitgestellt werden. Die erfindungsgemäße Vorrichtung erlaubt es, die verschleißbehafteten Medienübertrager, insbesondere in der Form der Drehübertrager, durch Versorgungseinrichtungen zu ersetzen, die nicht mehr zwingend im Bereich der Rotationsachse der Vorrichtung angeordnet sein müssen.

Die Versorgungseinrichtung kann insbesondere eine Schmierölpumpe sein.

Sie kann desweiteren eine zur Wasserförderung an einen ortsfesten Ringkanal angeschlossene Pumpe sein.
Ferner kann sie dazu geeignet sein, Pressluft zu erzeugen.

Außerdem kann sie geeignet sein, Vakuum zu erzeugen.

Sie ist insbesondere zur Erzeugung von Kühlluft geeignet.

Es ist selbstredend möglich, beliebige Kombinationen vorgenannter Versorgungseinrichtung(en) vorzusehen.

Unabhängig von der vorerwähnten Ausgestaltung sieht die Erfindung gleichermaßen vor, dass das Segment als Trägerstruktur für eine oder mehrere Versorgungseinrichtung(en) zur Bereitstellung von Wasser und/oder Vakuum und/oder Kühlluft und/oder Pressluft und/oder Schmieröl ausgebildet ist.

Jedes als Trägerstruktur ausgebildetes Segment umfasst dabei Anschlüsse, die die Einbindung des Segments in einen jeweiligen Versorgungskreislauf gewährleisten. Die Versorgungskreisläufe sind dabei voneinander getrennt und gegeneinander isoliert. Je nach Erfordernis sind voneinander getrennte Versorgungskreisläufe für den Transport der jeweiligen Medien vorgesehen.

Zusätzlich kann jedes Segment wenigstens einen Kompressor aufweisen, der die Pressluft bereitstellt, die zur Bearbeitung des Hohlkörpers erforderlich ist. Die Stromversorgung des Kompressors erfolgt kontaktlos. Die Kompressoren weisen einfache Anschlussstellen auf, und sind zu Wartungszwecken einfach und schnell austauschbar. Der Einsatz von wenigstens einem mit der Grundplatte rotierenden Kompressor zur Bereitstellung von Pressluft erweist sich als vorteilhaft, da hiermit die Nachteile der verschleißbehafteten und schwer zugänglichen mechanischen Drehübertrager bekannter Vorrichtungen vermieden werden können. Der Instandhaltungsaufwand und Maschinenstillstand können erheblich gesenkt werden.

Ferner ist das Segment als Trägerstruktur für mehrere funktionsgleiche Versorgungseinrichtungen zur Bereitstellung von Wasser und/oder Vakuum und/oder Kühlluft und/oder Pressluft und/oder Schmieröl ausgebildet.

In Abhängigkeit des Mediums, das zur Versorgung der Vorrichtung zur Herstellung von Hohlkörpern aus einer Glasschmelze bereitgestellt wird können mehrere funktionsgleiche Versorgungseinrichtungen jeweils auf einem Segment zusammengefasst werden. Ein gesondertes Segment versorgt zum Beispiel verschiedene Bereiche der Glasmaschine mit Wasser.

Die Erfindung sieht vor, dass das Segment als Trägerstruktur für mehrere funktionsverschiedene Versorgungseinrichtungen zur Bereitstellung von Wasser oder Vakuum oder Kühlluft oder Pressluft oder Schmieröl ausgebildet ist. Auf einem Segment des Karussells können jeweils wenigstens zwei in ihrer Funktion sowie nach ihren Aufgaben unterschiedliche Versorgungseinrichtungen angeordnet sein. Ein einzelnes Segment kann jeweils sämtliche zur Herstellung von Hohlkörpern aus einer Glasschmelze erforderlichen Versorgungseinrichtungen aufnehmen.

Weiterhin kann die die Versorgungseinrichtung vorzugsweise eine Schmierölpumpe sein. Die Schmierölpumpe ist an einen Verteiler angeschlossen, der sämtliche mit Schmieröl zu versorgende Arbeitselemente speist.
Eine weitere bevorzugte Variante der Erfindung sieht vor, dass die Versorgungseinrichtung eine Pumpe ist. Die Pumpe ist zur Förderung des jeweiligen Mediums an einen ortsfesten Ringkanal angeschlossen. Jedem separaten Segment ist ein eigener Ringkanal zugewiesen. Die Ringkanäle der benachbarten Segmente können über Kupplungen miteinander verbunden sein.

Bevorzugt ist in jedem Segment eine Pumpe integriert, die das zur Herstellung des Hohlkörpers bzw. das zur Funktion der Vorrichtung erforderliche Wasser und/oder, Vakuum und/oder, Kühlluft und/oder, Pressluft und/oder Schmieröl bereitstellt.

Ein wie vorstehend beschriebenes Segment gewinnt eine zusätzliche Effektivität. Der auf ihm angeordnete Trägermechanismus für eine Vorform wird gegenüber dem Stand der Technik verbessert. Dies wird nachfolgend beschrieben.
Es ist eine Vorrichtung zur Herstellung von Hohlkörpern aus einer Glasschmelze vorgesehen, die wenigstens einen, einen Antrieb aufweisenden, Trägermechanismus umfasst. Der Antrieb ist vorzugsweise kühlbar. Der Trägermechanismus bewegt mittels eines Trägers eine Vorform, die der Aufnahme eines Tropfens einer Glasschmelze zwischen zwei Arbeitspositionen dient. Dabei ist der wenigstens eine Antrieb des Trägermechanismus wenigstens ein Servoantrieb. Zusätzlich ist zur Führung des Trägers wenigstens eine rollende Führung und Zentrierung vorgesehen. Die Kühlung der Vorform und/oder des Bodens wird mittels Luftkühlung und/oder Wasserkühlung bewirkt. Insbesondere kann Umgebungsluft insbesondere mittels eines Gebläses verwendet werden.

Hingegen wird bei derartigen Vorrichtungen zur Kühlung der Vorform und/oder des Bodens und/oder der damit verbundenen Arbeitselemente Druckluft bzw. Pressluft eingesetzt. Diese Kühlweise ist kostenintensiv und konstruktiv aufwendig in der Bereitstellung. Diese Nachteile werden bei der vorgeschlagenen Lösung vermieden.

Weiterhin ist vorgesehen, dass der der Bewegung der Vorform zwischen den Arbeitspositionen dienende Trägermechanismus in analoger Form der Zuführung eines den Kölbel unterstützenden Bodens dient.

Die Trägermechanismen für die Vorform und für den den Kölbel unterstützenden Boden sind dabei prinzipiell gleich aufgebaut und werden deshalb nachfolgend - soweit nicht anders dargestellt - zusammenfassend abgehandelt. Durch diesen prinzipiell gleichartigen Aufbau können die entsprechenden Maschinenbauteile kostengünstig hergestellt, standardisiert und auch gegebenenfalls ausgetauscht werden. Beide Trägermechanismen werden in verschiedenen Maschinenapparaturen sowie an verschiedenen Stellen in der räumlichen Anordnung der Gesamtmaschine zur Herstellung von Hohlkörpern aus einer Glasschmelze angeordnet.

Die jeweiligen Träger beider Trägermechanismen für Vorform und Boden sind ihrer Zweckbestimmung entsprechend konstruktiv unterschiedlich ausgebildet.

Unter Servoantrieb im Sinne der Erfindung wird insbesondere jeglicher Antrieb mit elektronischer Lage-, Geschwindigkeits- oder Momentregelung oder eine Kombination derselben verstanden. Der Servoantrieb und seine verschiedenen Ausführungsformen sind an sich bekannt. Die Verwendung eines Servoantriebes ermöglicht eine vorausschauende Wartung. Zu jeder Produktionseinstellung sind die aktuellen Betriebszustände, Grenzwerte, Schleppfehler und/oder Stromaufnahmen speicherbar. Referenzdaten werden mit Daten des aktuellen Betriebszustands verglichen. Auf diese Weise können Meldungen und Warnungen vor Eintritt eines Störfalls generiert werden. Überprüfungen oder Wartungen des Systems werden vor dem Störfall ausgelöst, wodurch Revisionen planbar sind und Produktionsausfälle und Reparaturkosten minimiert werden können.

Zur Bewegung der wenigstens einen Vorform von der Tropfenzuführungsposition zur wenigstens einen Presseinrichtung wird wenigstens ein Servoantrieb vorgesehen. Dieser Servoantrieb kann ein Linearmotor sein. Bevorzugt ist, dann wenn die Antriebskinematik die Antriebsenergie in rotatorischer Form benötigt, ein Torquemotor. Weiter kommt als geeignet ein Motor mit Ritzel-Zahnstange in Betracht. Diese Antriebe können weiter bevorzugt Kniehebelgetriebe aufweisen. Diese Antriebe können weiter bevorzugt Gewindespindel/ Gewindemutter-Kombinationen aufweisen. Diese Antriebe können weiter bevorzugt als Kurvengetriebe ausgeführt werden. Diese Antriebe können weiter bevorzugt Ketten- und Zahnriemen umfassen. Diese Antriebe können weiter bevorzugt Kurbelantriebe aufweisen. Diese Ausgestaltungen des Servoantriebs gelten sinngemäß auch für die weiteren erfindungsgemäß vorgesehenen Servoantriebe.

Weiterhin ist möglich, dass der Bewegungsablauf spiegelbildlich von der zur Bewegung der der Formung des Hohlkörpers dienenden Einrichtung zur wenigstens einen Vorform erfolgt. Es gelten die vorstehenden Ausführungen zur Antriebsart auch in diesem Fall.

Der servoelektrische Antrieb ist vorzugsweise ein dezentraler Antrieb, auch genannt Feldbusservoantrieb. Hierdurch sind auf der Maschine mitfahrende Schaltschränke, welche einer hohen Temperaturbelastung ausgesetzt sind, nicht weiter erforderlich. Hierdurch wird insbesondere für Wartungsarbeiten der Zugang zu z.B. sich im inneren Bereich der Maschine befindlichen Bauteile erleichtert.

Vorzugsweise vorgesehen ist, dass der servoelektrische Antrieb ein Torquemotor und/oder ein Linearmotor ist. Insbesondere bevorzugt ist ein Torquemotor, wenn die Antriebskinematik die Antriebsenergie in rotatorischer Form benötigt. Weiter kommt als geeignet ein konventioneller Motor in Betracht. Diese Antriebe können weiter bevorzugt Ritzel-Zahnstange aufweisen. Diese Antriebe können weiter bevorzugt Kniehebelgetriebe aufweisen. Diese Antriebe können weiter bevorzugt Gewindespindel/Gewindemutter-Kombinationen aufweisen. Diese Antriebe können weiter bevorzugt als Kurvengetriebe ausgeführt werden. Diese Antriebe können weiter bevorzugt Ketten- und Zahnriemen umfassen. Diese Ausgestaltungen des Servoantriebs gelten sinngemäß auch für die weiteren erfindungsgemäß vorgesehenen Servoantriebe. Nach einer bevorzugten Ausführungsform ist der servoelektrische Antrieb ein Kurbelantrieb. Der Servo-Kurbelantrieb wird vorzugsweise zur kombinierten Vertikal- und Schwenkbewegung der Vorform von der Tropfenzuführungsposition in die Pressposition vorgesehen. Der Kurbelantrieb arbeitet zwischen zwei Totpunkten, weshalb zunächst ein sinusförmiger Bewegungsablauf erzielbar ist. Der obere Totpunkt ist durch eine große Kraftübersetzung gekennzeichnet. Im oberen Totpunkt sind Kräfte von mehreren kN erforderlich, um der Presskraft des Plungers entgegenzuwirken. Hier werden Kräfte von beispielsweise 15 kN benötigt. Durch einen servoelektrischen Antrieb in Form eines Kurbelantriebs ist es überdies möglich, die Leistung eines Antriebsmotors von etwa 4 KW auf unter 1 KW zu reduzieren.

Darüber hinaus kann der Servoantrieb als servo-pneumatischer und/oder servohydraulischer Antrieb ausgebildet sein.

Es ist weiterhin bevorzugt, dass alle Antriebselemente miteinander synchronisierbar sind.

Durch den Einsatz eines oder mehrerer Servoantriebe in Verbindung mit elektronischen Getrieben wird folglich gewährleistet, dass die Bewegungsabläufe geschwindigkeitssynchron, winkelsynchron und wiederholgenau erfolgen.

Der Einsatz wenigstens eines Servoantriebs bei der erfindungsgemäßen Vorrichtung führt dadurch zu einer erheblichen Qualitäts- und Ertragsverbesserung bei der Herstellung von Hohlkörpern aus einer Glasschmelze.

Die mit der Verwendung eines Servoantriebs insbesondere einhergehende Möglichkeit des Einsatzes leistungsoptimierte Antriebe erlaubt des Weiteren die Standardisierung von Bauteilen. So können insbesondere derartige leistungsoptimierte Antriebe mehrfach in derartigen Vorrichtungen verwendet werden. Dies reduziert die Investitionskosten durch geringere Ausgaben für Ersatzteile und es erhöht die Anlagenverfügbarkeit durch Standardisierung. Auf den Einsatz von großvolumigen pneumatischen Zylindern kann verzichtet werden, ebenso auf die beschriebenen Stoßdämpfer.

Der Einsatz eines Servoantriebs führt ferner zur Verkürzung der Einstellzeiten und darüber hinaus zu reproduzierbaren Abläufen. Durch Erhöhung der damit verbundenen Effektivität werden weitergehend Kosten gespart.

Ferner reduziert der Einsatz eines derartigen Servoantriebes das bisher hohe Unfallrisiko und führt zu einer Verringerung der Arbeitsplatzbelastung für das Bedienpersonal.

Nach einer Ausführungsform der Erfindung werden zwei Rollen angeordnet. Es ist dabei vorgesehen, dass die rollende Führung und/oder Zentrierung mindestens eine einstellbare Rolle umfasst, die spielfrei in einer Nut und/oder auf einem Kurvenstück abrollt. Hierbei sind auf einer Welle wenigstens je zwei Rollen über je ein Kugellager angeordnet, wobei eine Rolle gegenüber der Mittelachse exzentrisch angeordnet ist und die andere Rolle mittig auf der Welle angeordnet. Durch die Exzentrizität dieser Rollen zueinander werden in den Arbeitsstellungen für Vorform und Boden Zentrierung und damit die die Winkelgenauigkeit erreicht. Das Einspannen beider Rollen erfolgt in der Nutführung. Die Nutführung ist in diesen Bereichen entsprechend eng toleriert.

Eine solche Konstruktionsweise erweist sich als vorteilhaft, da mithilfe des Trägermechanismus die Bewegung des Bodens bzw. der Vorform spielfrei realisierbar ist. Zusätzlich kann eine definierte Schmierung erfolgen und der Verschleiß signifikant verringert werden, wodurch die Lebensdauer der Bauteile insgesamt erhöht wird und die wartungsfreie Produktionszeit verlängert wird. Hierdurch wird erreicht, dass die Schwenkbewegung zwischen der Tropfenzuführungspositionen und der Pressposition spielfrei und kontrolliert schmierbar ist. Rollende Führungen und Zentrierungen sind gegenüber Gleitführungen weniger verschleißanfällig. Vorzugsweise kann dabei mindestens eine der beiden Endlagef über fernverstellbare Elemente der Nut oder des Kurvenstücks verfügen.

Es wird erreicht, dass die Vorform in Bezug auf ihre Arbeitspositionen, nämlich in Bezug auf die Tropfenzuführungsposition und auf die Pressposition, jeweils eine exakte Winkel-Position einnimmt.

In Bezug auf den Boden erweist sich die Ausführungsform der Erfindung als vorteilhaft, da der Boden zur Unterstützung des Kölbels im Blasprozess eine vorbestimmte Position winkelgenau einnimmt. Auf diese Weise wird gewährleistet, dass die Vorrichtung zur Herstellung von Hohlkörpern Glaskörper höchster Qualität und Güte erzeugt.

Vorzugsweise verfügt mindestens eine der beiden Endstellungen über fernverstellbare Elemente der Nut oder des Kurvenstücks.

In einer anderen bevorzugten Ausführungsform der Erfindung ist zur Bewegung der Vorform von der Tropfenzuführungsposition in die Pressposition und/oder zur Bewegung des Bodens unter den Kölbel im Zusammenhang mit dem Blasvorgang wenigstens ein Roboter vorgesehen.

Es hat sich überraschend gezeigt, dass die erfindungsgemäßen Vorrichtungen besonders effektiv arbeiten, wenn sie als Roboter ausgebildet sind. Unter einem Roboter versteht die Erfindung jeglichen Bewegungsautomaten mit einer oder mehreren Achsen. Es kann sich hierbei auch um Maschinen auf der Basis der NC-Technologie oder CNC-Technologie handeln. Insbesondere werden solche Bewegungsautomaten hierunter verstanden, deren Bewegungen hinsichtlich Bewegungsfolge und Wegen bzw. Winkeln frei programmierbar und gegebenenfalls sensorgeführt sind. Sie können vorzugsweise mit Greifern, Trägern, Magnete oder anderen Fertigungsmitteln ausrüstbar sein und Handhabungs- und/oder Fertigungsaufgaben ausführen. Besonders bevorzugt ist eine solche Vorrichtung, die über mindestens drei frei bewegliche Achsen verfügt. Aber auch Handhabungsgeräte, die über kein Computerprogramm verfügen, sondern direkt vom Bediener geführt werden, werden als Roboter im Sinne der Erfindung verstanden.

Die Bewegungsautomaten können insbesondere vorzugsweise nach einem konstanten Bewegungsmuster arbeiten. Weiter bevorzugt ist es, wenn dieses Bewegungsmuster schnell und problemlos geändert werden kann. Ferner werden hierunter Bewegungsautomaten verstanden, die vorzugsweise über verschiedene Sensoren verfügen und damit in der Lage sind, den Programmablauf selbsttätig den Veränderungen der zu formenden Hohlkörper und/oder den bei ihrer Herstellung vorhandenen Einsatzbedingungen anzupassen.

Insbesondere bevorzugt ist, dass der Trägermechanismus ein Roboter ist. Alternativ kann es vorgesehen sein, die vorstehenden Bewegungsabläufe sinngemäß in umgekehrter Richtung vorzunehmen, also die Presseinrichtung und/oder die kombinierte Press-Blaseinrichtung zur Vorform hin zu bewegen bzw. die Blaseinrichtung und/oder die kombinierte Press-Blaseinrichtung hin zum Boden zu bewegen.

Für den Fall, in dem der Trägermechanismus, mittels eines Vorformträgers eine Vorform, die der Aufnahme eines Tropfens einer Glasschmelze dient, zwischen wenigstens zwei Arbeitspositionen bewegt, kann die Vorform in einer definierten Warteposition am Segment der Presseinrichtung bzw. der Blaseinrichtung positioniert sein. Der Roboter nimmt die Vorform auf, insbesondere greift er sie, und bewegt diese in die Tropfenzuführungsposition. Hierbei kann der Roboter die Vorform entgegen der Umfangsgeschwindigkeit des Karussells bewegen, wodurch eine deutliche Verringerung der absoluten Geschwindigkeit der Vorform erreicht wird. Durch diese verringerte Geschwindigkeit wird die Qualität der Tropfenzuführung gravierend verbessert. Hierauf bewegt der Roboter vorzugsweise die Vorform mit dem Tropfen hin zur Presseinrichtung.

Es kann vorgesehen sein, dass die Vorform durch eine Einrichtung an einer der Formung des Hohlkörpers dienenden Presseinrichtung und/oder Blaseinrichtung und/oder einer kombinierten Press-Blaseinrichtung fixiert wird.

Die Einrichtung kann die Fixierung pneumatisch, magnetisch, mechanisch oder hydraulisch oder aus Kombinationen hieraus realisieren. Die Fixierung kann lösbar sein. Hierauf erfolgt die Formung des Kölbels durch die Presseinrichtung oder eine kombinierte Press-Blaseinrichtung. Nach dem Pressvorgang nimmt der Roboter die Vorform in der Presseinrichtung und/oder in der kombinierten Press-Blaseinrichtung auf und führt die Vorform wieder in die Warteposition zurück.

In dem Fall, in dem der Träger des Trägermechanismus der Bewegung eines Bodens dient, greift der Roboter vorzugsweise den Boden aus einer definierten Warteposition an einem Segment der Press-Blasmaschine und bewegt den Boden durch einen vordefinierten Bewegungsablauf unter den Kölbel. Durch die vertikale Bewegung des Bodens unter dem sich durch Schwerkraft auslängenden Kölbel kann die Formung des Kölbels positiv gesteuert werden. Hierauf erfolgt die Fertigformung des Hohlkörpers durch die Blaseinrichtung oder der kombinierten Press-Blaseinrichtung. Nachfolgend setzt der Roboter den Boden wieder in die definierte Warteposition.

Es kann weiter vorgesehen sein, dass der Roboter den fertig geformten Hohlkörper mit seinem Greifer aus der Blaseinrichtung oder einer kombinierten Press-Blaseinrichtung entnimmt und einer weiteren nicht näher beschriebenen Transporteinrichtung zuführt.

Den vorgeschilderten Greifbewegungen im Sinne einer Ausführungsform der vorliegenden Erfindung sind auch solche Bewegungsabläufe, gleichgestellt, die durch andere Aufnahmemittel bewerkstelligt werden. Hierbei kommen z.B. Sauger, Magnete in Betracht. Die Aufnahmemittel, insbesondere die Greifer, können entsprechend der zu handhabenden Gegenstände, z.B. Vorform, Boden oder Hohlkörper, gewechselt, angepasst und eingestellt werden.

Die vorstehenden Ausführungsformen erweisen sich als vorteilhaft, weil der beschriebene Roboter aufwendige mechanische Baugruppe, z.B. Vorformmechanismus und Bodenhubmechanismus, funktional ersetzt. Ein weiterer Vorteil besteht in der einfachen Umschaltung bzw. Änderung des Bewegungsablaufes und einer vergleichsweise schnellen Anpassung an verschiedene Vorformen und Hohlkörperformen.

Durch die Verwendung von Robotern werden darüber hinaus negative Eigenschaften, wie z.B. schlechte Reproduzierbarkeit von pneumatischen Zylindern, deren hoher Verschleiß, damit verbundene Produktionsausfälle und vor allen Dingen die Gefährdung im Arbeitsablauf eliminiert.

Überdies kann vorgesehen sein, dass der Roboter elektronisch an einen Hauptantrieb der Herstellungsmaschine gekoppelt ist. Diese Konstruktionsweise erweist sich deshalb als besonders vorteilhaft, da eine einfache Umschaltung bzw. Änderung des Bewegungsablaufes und ein schnelle Anpassung an verschiedene Artikel und Formen möglich wird.

In einer alternativen Ausführungsform der Erfindung ist der Roboter stationär außerhalb eines Karussells der Vorrichtung zur Herstellung von Glaskörpern angeordnet. Der Roboter kann in dieser Ausgestaltung beim Betrieb der Vorrichtung gezielt von außen in das Karussell eingreifen und die Bewegung der Vorform bzw. die Bewegung des unterstützenden Bodens ausführen. In diesem Fall vollzieht der Roboterfuß die kontinuierlichen Umlaufbewegungen des Karussells nicht nach.

Die stationäre Anordnung des wenigstens einen Roboters außerhalb der vorerwähnten Maschinenbaugruppen erfüllt dieselben Vorteile wie im Falle seiner mit dem Karussell mitlaufenden Anordnung; darüber hinaus gewährleistet die dezentrale und mechanisch entkoppelte Bauweise einen einfachen Wechsel des Roboters bzw. eine einfache Wartung ohne zeitraubende Demontage am Karussell.

Weiter wird die Effektivität des oben beschriebenen Segments dadurch verbessert, dass auch die mit ihm in Wirkzusammenheit stehende Press-Blaseinrichtung einschließlich Plunger und Neckring, verbessert wird. Dies wird nachfolgend beschrieben.

Vorzugsweise wird dieser verbesserte Mechanismus der Press-Blaseinrichtung zusammen mit dem verbesserten Mechanismus der Vorform, wie oben beschrieben, eingesetzt.

Die Erfindung betrifft eine Vorrichtung zur Herstellung von Hohlkörpern aus einer Glasschmelze mit einer der Aufnahme eines Tropfens einer Glasschmelze dienenden und den Glaskörper formenden Vorform und einem den Glaskörper aufnehmenden Neckring eines Neckringmechanismus sowie mit einer Kühleinrichtung zur Kühlung eines Plungers, wobei der Plunger mittels eines Antriebs eines Plungermechanismus innerhalb des Neckrings axial zur Vorform bewegbar ist.

Die Vorrichtung zur Herstellung von Hohlkörpern aus einer Glasschmelze kann eine Presseinrichtung und eine Blaseinrichtung umfassen. Weiterhin ist auch eine Kombination beider in Form einer Press-Blaseinrichtung möglich. Im Weiteren wird vereinfachend von einer Presseinrichtung ausgegangen. Bestandteile der Presseinrichtung sind vorzugsweise unter anderem eine Vorform und ein Plunger sowie ein Neckring. Es ist bekannt, dass der Glastropfen mit Hilfe der wenigstens einen Presseinrichtung unter Zusammenwirken von Vorform, Neckring und Plunger zum Kölbel gepresst wird.

Im Sinne der vorliegenden Erfindung ist der Plunger ein Bauteil, mit dem in einer Vorrichtung zur Herstellung von Hohlkörpern aus einer Glasschmelze in einem Hohlraum zwischen einer Vorform und einem Neckring ein Glastropfen zum einen Kölbel umgeformt wird.

Unter Servoantrieb im Sinne der Erfindung wird insbesondere jeglicher Antrieb mit elektronischer Lage-, Geschwindigkeits- oder Momentregelung oder eine Kombination derselben verstanden. Der Servoantrieb und seine verschiedenen Ausführungsformen sind an sich bekannt. Die Verwendung eines Servoantriebes ermöglicht eine vorausschauende Wartung. Zu jeder Produktionseinstellung sind die aktuellen Betriebszustände, Grenzwerte, Schleppfehler und/oder Stromaufnahmen speicherbar. Referenzdaten werden mit Daten des aktuellen Betriebszustands verglichen. Auf diese Weise können Meldungen und Warnungen vor Eintritt eines Störfalls generiert werden. Überprüfungen oder Wartungen des Systems werden vor dem Störfall ausgelöst, wodurch Revisionen planbar sind und Produktionsausfälle und Reparaturkosten minimiert werden können.

Durch den prinzipiell gleichartigen Aufbau der Servoantriebe können die entsprechenden Maschinenbauteile kostengünstig hergestellt, standardisiert und auch gegebenenfalls ausgetauscht werden. Die Servoantriebe können in verschiedenen Maschinenapparaturen sowie an verschiedenen Stellen in der räumlichen Anordnung der Gesamtmaschine zur Herstellung von Hohlkörpern aus einer Glasschmelze eingesetzt werden. Dies reduziert die Investitionskosten durch geringere Ausgaben für Ersatzteile und es erhöht die Anlagenverfügbarkeit durch Standardisierung.

Weiterhin wird dadurch bewerkstelligt, dass notwendige Kupplungs-, Bremskombinationen, die damit verbundene Störanfälligkeit und der Wartungsaufwand vemieden werden können. Damit einhergehender Produktionsausfall wird ebenfalls vermieden.

Der Neckring ist zwischen Plunger und Vorform angeordnet; seine Funktion ist es, den Vorformling bzw. den Kölbel für den Zeitraum von der Vorformung bis zur Entnahme des Hohlkörpers durch den Takeout aufzunehmen und zu transportieren.

Der Einsatz wenigstens eines Servomotors zum Antrieb des Plungers bewirkt, dass der Plunger während des Glasherstellungsprozesses jeweils vorzugsweise stufenlos vertikal bewegbar ist. Bevorzugt ist der Plunger mithilfe wenigstens eines Servoantriebs stufenlos relativ zu Bestandteilen der Vorrichtung zur Herstellung von Hohlkörpern bewegbar. Unter einer stufenlosen Bewegung ist eine kontrollierte Bewegung zu verstehen, in der der Plunger jede beliebige Position zwischen zwei Endstellungen oder Zwischenstellungen einnehmen kann. Die Erfindung lässt jegliche Position des Plungers zwischen einer oberen Endstellung und einer unteren Endstellung zu. In der oberen Endstellung befindet sich die Plungerspitze über dem oberen Rand des Hohlkörpers und ermöglicht die Entnahme des in diesem Stadium geformten Kölbelkörpers. In der unteren Endstellung ist der Plunger bei vollendetem Pressvorgang vollständig in die Aufnahmeöffnung der Vorform eingefahren.

Nach Vorgabe der Erfindung ist es weiterhin bevorzugt, dass der Plunger nach erfolgter Formung des Hohlkörpers im Pressvorgang stufenlos und mit reproduzierbarer und einstellbarer Geschwindigkeit bewegbar ist.

Der Plunger kann dabei kontrolliert zunächst langsam und vorzugsweise daraufhin schnell aus der Vorform heraus bewegt werden. Das Herausfahren des Plungers aus der Vorform wird nicht mehr geprägt durch eine unkontrollierte schnelle Aufwärtsbewegung des pneumatisch angetriebenen Plungers. Die Bildung eines Vakuums zwischen dem Plunger und dem Kölbel wird vermieden, wodurch ein Aufsaugen des Kölbels durch die Aufwärtsbewegung des Plungers unterbleibt. Die Erfindung ermöglicht, dass der Plunger besonders bevorzugt stufenlos, axial in die Aufnahmeöffnung der Vorform hineingefahren und aus dieser auch wieder herausgefahren werden kann.

Der erfindungsgemäße Einsatz servobetriebener Plunger führt weiterhin zu einer Verkürzung der Einstellung-und Optimierungsphase. Damit einher geht eine Steigerung der effektiven Produktionszeit.

Der Einsatz des wenigstens einen Servomotors zum Antrieb des Plungers ermöglicht zusätzlich eine verbesserte Kühlung des Plungers. Der Plunger kann besonders bevorzugt, in einer kontrollierten und stufenlosen Bewegung an wenigstens eine Kühlbohrung der wenigstens einen Kühleinrichtung herangefahren werden. Aufgrund der Erfindung ist es bevorzugt möglich, unterschiedliche Bereiche des Plungers unterschiedlich lange an wenigstens eine Kühlluftbohrung heran zu fahren. Der Plunger kann dadurch bereichsweise gekühlt werden, wobei die unterschiedlichen Bereiche des Plungers unterschiedlich lange der Kühlluft ausgesetzt werden können.

Eine weitere bevorzugte Ausführungsform sieht vor, dass der Plunger nach Vollendung des Pressvorgangs der Glasschmelze innerhalb der Aufnahmeöffnung der Vorform unabhängig von der unteren- bzw. von der oberen Endstellung geringfügig von der Glasschmelze abgelöst werden kann. Der Kontakt zwischen dem Plunger und der Glasschmelze wird unterbrochen. Der Plunger kann dem Kölbel die Hitze weit feinfühliger entziehen, als dies in der oberen Endstellung des Plungers möglich ist. Dadurch, dass der Plunger erfindungsgemäß kontrolliert bewegbar ist, ist der Plunger graduell vom Kölbel ablösbar. Der Abstand des Plungers zum Kölbel innerhalb der Aufnahmeöffnung der Vorform kann beliebig
verändert werden. Analog kann der Plunger vorzugsweise durch einen stufenlos einstellbaren Abstand zum Kölbel kontrolliert dem Kölbel Wärme entziehen und wiederum analog selbst vom Kölbel Wärme aufnehmen.

Bevorzugt kann durch den einstellbaren Abstand des Plungers zum in der Vorform befindlichen Glastropfen die Formung des Kölbels durch Vermeidung eines Plungerleerhubes zeitlich wesentlich schneller erfolgen. Durch diese Zeiteinsparung wird eine Leistungssteigerung und/oder eine Qualitätssteigerung durch den Zugewinn an verfügbarer Formungszeit erreicht.

Desweitern kann der Glastropfen mit geringerem Temperaturabfall verarbeitet werden.

Der erfindungsgemäße servoelektrische Plungerantrieb ermöglicht weiterhin eine Steigerung der effektiven Produktionszeit durch Verkürzung der bisher erforderlichen Einstellphase sowie durch Verkürzung der Optimierungsphase. Die Erfindung erweist sich auch schon deshalb als vorteilhaft, da das Gefährdungspotenzial für die Bedienungsmannschaft weiter gravierend reduziert werden kann. Aufgrund einer automatischen Übertragung der Einstellungen auf die übrigen Segmente ist es nicht mehr erforderlich, dass der Maschinenbediener in die laufende Maschine zur Glasherstellung eingreifen muss. Beispielhaft können durch den servoelektrischen Plungerantrieb bei einer Maschine mit 18 Sektionen ca. 54 manuelle Eingriffe an der rotierenden Maschine eliminiert werden.

Erfindungsgemäß ist ein wenigstens ein Servoantrieb vorgesehen, der eine stufenlose Bewegung des Plungers innerhalb des Neckrings ermöglicht.

Der Neckringmechanismus weist wenigstens einen inneren Neckring und wenigstens einen äußeren Neckring auf, welche mittels Schrauben am Neckringmechanismus befestigt sind.

Der Neckringmechanismus weist vorzugsweise wenigstens einen inneren Neckring und wenigstens einen äußeren Neckring auf, welche schraubenlos am Neckringmechanismus befestigt sind.

Die Erfindung ermöglicht, dass der Plunger besonders bevorzugt stufenlos, axial in die Aufnahmeöffnung der Vorform hineingefahren und aus dieser auch wieder herausgefahren werden kann.

Nach einer weiteren bevorzugten Ausführungsform der Erfindung ist der Antrieb des Plungers ein servoelektrischer Antrieb. Der Servoantrieb wird eingesetzt, um die bisher verwendeten großvolumigen pneumatischen Zylinder zu ersetzen. Servoelektrische Antriebe sind zum Beispiel als Linearmotoren, Torquemotoren, Motoren mit Ritzel-Zahnstange, Kniehebel-, Kurvenscheiben- oder Kurbelantrieb ausgeführt. Vorzugsweise der Ritzel-Zahnstangenantrieb kann unrunde Zahnräder umfassen. Auf diese Weise kann der Servoantrieb insbesondere bei schnellen Bewegungen, die wenig Kraft benötigen und bei langsamen Bewegungen, bei denen eine hohe Antriebskraft erforderlich ist besonders effizient ausgelegt werden.

Der Vorteil einer derartigen Konstruktionsweise besteht darin, dass die für den Antrieb des Plungers erforderliche Leistung auch von einem leistungsreduzierten Servomotor bereitgestellt werden kann. Hierdurch liefert die Erfindung einen weiteren Beitrag zur Erzielung von Energieeffizienz. Zusätzlich können im Bereich des Plungermechanismus weitere Bauteile standardisiert werden. Der leistungsreduzierte Antriebsmotor kann effektiv an verschiedenen Stellen der Maschinen zur Glasherstellung eingesetzt werden. Investitionskosten und Ausgaben für Ersatzteile können durch die Standardisierung gesenkt werden. Insgesamt gesehen erhöht sich die Anlagenverfügbarkeit der Vorrichtung zur Herstellung von Hohlkörpern aus einer Glasschmelze.

Der servoelektrische Antrieb kann insbesondere als dezentraler Antrieb ausgebildet sein. Hierdurch sind Schaltschränke, welche einer hohen Temperaturbelastung ausgesetzt sind, nicht weiter erforderlich. Auch wird insbesondere für Wartungsarbeiten der Zugang zu z.B. sich im inneren Bereich der Maschine befindlichen Bauteile erleichtert.

Weiterhin ist bevorzugt, dass der servoelektrische Antrieb ein Torquemotor und/oder ein Linearmotor ist. Insbesondere bevorzugt ist ein Torquemotor, wenn die Antriebskinematik die Antriebsenergie in rotatorischer Form benötigt. Weiter kommt als geeignet ein Motor mit Ritzel-Zahnstange in Betracht. Diese Antriebe können weiter bevorzugt Kniehebelgetriebe aufweisen. Diese Antriebe können weiter bevorzugt Gewindespindel/Gewindemutter-Kombinationen aufweisen. Diese Antriebe können weiter bevorzugt als Kurvengetriebe ausgeführt werden. Diese Antriebe können weiter bevorzugt Ketten- und Zahnriemen umfassen. Diese Ausgestaltungen des Servoantriebs gelten sinngemäß auch für die weiteren erfindungsgemäß vorgesehenen Servoantriebe.

In einer weiteren bevorzugten Ausführungsform wird ein servopneumatischer und/oder servohydraulischer Antrieb eingesetzt.

Weiterhin wird bevorzugt, dass alle Antriebselemente miteinander synchronisierbar sind.

In einer anderen bevorzugten Variante der Erfindung sind der äußere Neckring mehrteilig und/oder der jeweils innere Neckring des Neckringmechanismus einteilig ausgebildet. Bei bekannten Vorrichtungen zur Herstellung von Hohlkörpern aus einer Glasschmelze ist der innere Neckring des Neckringmechanismus in der Regel einteilig ausgebildet. Der innere Neckring wird von oben in den Neckringhalter eingeschraubt. Dies erfordert eine vorausgehende Demontage des gesamten Neckringmechanismus. Dieser Arbeitsgang ist sehr zeitaufwändig und bedeutet aufgrund des hohen Gewichts des Neckringmechanismus eine enorme zusätzliche Arbeitsbelastung für die Maschinenbediener.

Aufgrund einer prozessbedingten hohen Arbeitstemperatur muss der Neckringmechanismus vor einer Montage abgekühlt werden. Die Erfindung sieht daher am äußeren, mehrteiligen Neckring vorzugsweise einen verbesserten Öffnungsmechanismus vor. Ein vergrößerter Öffnungswinkel des äußeren mehrteiligen Neckrings erlaubt es, den inneren einteiligen Neckring von außen in den äußeren Neckring einzuschrauben. Besonders bevorzugt ist es darüber hinaus, dass die mehreren Bauteile des äußeren Neckrings ohne weitere Schraubenverbindungen am Neckringmechanismus befestigt werden können. Hierdurch werden die oben geschilderten aufwändigen und belastenden Reparatur-und Demontagearbeiten erheblich vereinfacht sowie eine Erhöhung der Produktionskapazität erreicht.

Der Plunger ist vorzugsweise mithilfe einer automatischen Klemmung am Plungermechanismus befestigt. Ein Werkzeug ist zum Befestigen oder zum Lösen des Plungers nicht mehr erforderlich. Die Klemmung kann vielmehr pneumatisch oder federbetätigt aktiv durch Knopfdruck geöffnet oder geschlossen werden. Vor Lösung der Klemmung wird das in der Kühlkammer befindliche Restwasser mittels eines Luftimpulses ausgestoßen.

Nach einer weiteren bevorzugten Ausführungsform der Erfindung ist, bevorzugt neben dem Servoantrieb des Plungers, der Antrieb des Neckrings ein Servoantrieb, insbesondere ein servoelektrischer Antrieb.

Für diesen gelten analog dieselben Vorteile wie für den Einsatz eines solchen Antriebs im Zusammenhang mit dem Plunger, so dass die hierzu erfolgten obigen Ausführungen auch zum Gegenstand der Offenbarung im Zusammenhang mit dem Neckring erfolgen.

Servoelektrische Antriebe sind zum Beispiel als Linearmotoren, Torquemotoren, Motoren mit Ritzel-Zahnstange, Kniehebel-, Kurvenscheiben- oder Kurbelantrieb ausgeführt. Vorzugsweise der Ritzel-Zahnstangenantrieb kann unrunde Zahnräder umfassen. Auf diese Weise kann der Servoantrieb insbesondere bei schnellen Bewegungen, die wenig Kraft benötigen und bei langsamen Bewegungen, bei denen eine hohe Antriebskraft erforderlich ist besonders effizient ausgelegt werden. Der Vorteil einer derartigen Konstruktionsweise besteht darin, dass die für den Antrieb des Neckrings erforderliche Leistung auch von einem leistungsreduzierten Servomotor bereitgestellt werden kann.

Hierdurch liefert die Erfindung einen weiteren Beitrag zur Erzielung von Energieeffizienz. Zusätzlich können im Bereich des Neckringmechanismus weitere Bauteile standardisiert werden. Der leistungsreduzierte Antriebsmotor kann effektiv an verschiedenen Stellen der Maschinen zur Glasherstellung eingesetzt werden. Investitionskosten und Ausgaben für Ersatzteile können durch die Standardisierung gesenkt werden. Insgesamt gesehen erhöht sich die Anlagenverfügbarkeit der Vorrichtung zur Herstellung von Hohlkörpern aus einer Glasschmelze.

Der servoelektrische Antrieb kann insbesondere als dezentraler Antrieb ausgebildet sein. Hierdurch sind Schaltschränke, welche einer hohen Temperaturbelastung ausgesetzt sind, nicht weiter erforderlich. Auch wird insbesondere für Wartungsarbeiten der Zugang zu z.B. sich im inneren Bereich der Maschine befindlichen Bauteile erleichtert.

Weiterhin ist bevorzugt, dass der servoelektrische Antrieb ein Torquemotor ist. Insbesondere bevorzugt ist ein Torquemotor, wenn die Antriebskinematik die Antriebsenergie in rotatorischer Form benötigt.

Weiter kommt als geeignet ein Zahnriemen-, und/oder ein Ketten- und/oder ein Zahnradantrieb in Betracht.

In einer weiteren bevorzugten Ausführungsform wird ein servopneumatischer und/oder servohydraulischer Antrieb eingesetzt.

Weiterhin wird bevorzugt, dass alle Antriebselemente miteinander synchronisierbar sind.

Die servoangetriebene Neckringdrehung kann bei der Formung des Kölbels und/oder bei der drehenden und/oder feststehenden Formung des Hohlkörpers und/oder bei der Entnahme des Hohlkörpers eine definierte Position einnehmen. Dadurch kann insbesondere die Entnahme für unrunde, ovale, asymmetrische und vielflächige Hohlkörper, welche vorteilhaft eine diesen Formen angepasste Kontur von Neckring und/oder Vorform und/oder Plunger und/oder Fertigform und/oder der Greiferzange erfordern, verbessert werden.

Weiterhin wird dadurch bewerkstelligt, dass notwendige Kupplungs-, Bremskombinationen, die damit verbundene Störanfälligkeit und der Wartungsaufwand vermieden werden können. Damit einhergehender Produktionsausfall wird ebenfalls vermieden.

Bei einer weiteren bevorzugten Ausführungsform der Vorrichtung weisen wenigstens zwei Arbeitselemente wenigstens einen gemeinsamen Servoantrieb auf.

Besonders bevorzugt ist dabei eine Ausführungsform der Vorrichtung, bei der die Vorform und/oder der Plunger und/oder der Boden und/oder der Neckring wenigstens eine gemeinsame Servoantrieb aufweisen, der seinersetis bevorzugt servoelektrisch sowie ferner als Torquemotor oder als Linearmotor ausgebildet ist.

Ferner kann der servoelektrische Antrieb ein Kurbelantrieb, ein Motor mit Ritzel-Zahnstange oder ein Kniehebel-, oder ein Kurvenscheibenantrieb oder ein Zahnriemen oder Ketten- und/oder ein Zahnradantrieb und/oder eine Gewindespindel/ Gewindemutter-Kombination sein.

Desweiteren kann der Servoantrieb als servopneumatischer und/oder servohydraulischer Antrieb aufgebaut sein.

Bevorzugt kann der servoelektrische Antrieb ein dezentraler Antrieb sein.

Im Folgenden soll die Erfindung beispielhaft, ohne Beschränkung der Allgemeinheit anhand eines in der Zeichnung dargestellten Ausführungsbeispiels näher erläutert werden.

Hierbei zeigen:
Fig. 1 einen Drehübertrager, der bei Vorrichtungen aus dem Stand der Technik zur Herstellung von Hohlkörpern die zur Produktion der Hohlkörper erforderlichen Medien bereitstellt,
Fig. 2 einen kombinierten und auf einem gemeinsamen Segment angeordneten Trägermechanismus, der einen Vorform-Träger, einen Boden-Träger und einen Plunger umfasst,
Fig. 3 einen kombinierten und auf einem gemeinsamen Segment angeordneten Trägermechanismus entsprechend Fig. 2, der mit Versorgungseinrichtungen ausgestattet ist,
Fig. 4 in schematischer Darstellung einen Schnitt durch ein Segment, bei dem je Medium eine Pumpe vorgesehen ist und
Fig. 5. in schematischer Darstellung einen Schnitt durch ein Segment, bei dem je Segment und je Medium eine getrennte Pumpe vorgesehen ist.

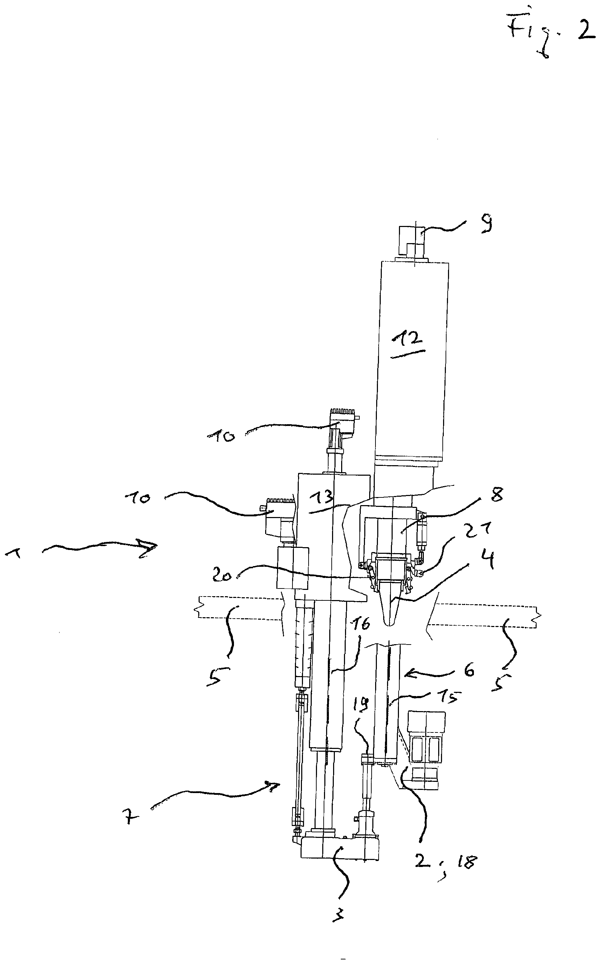

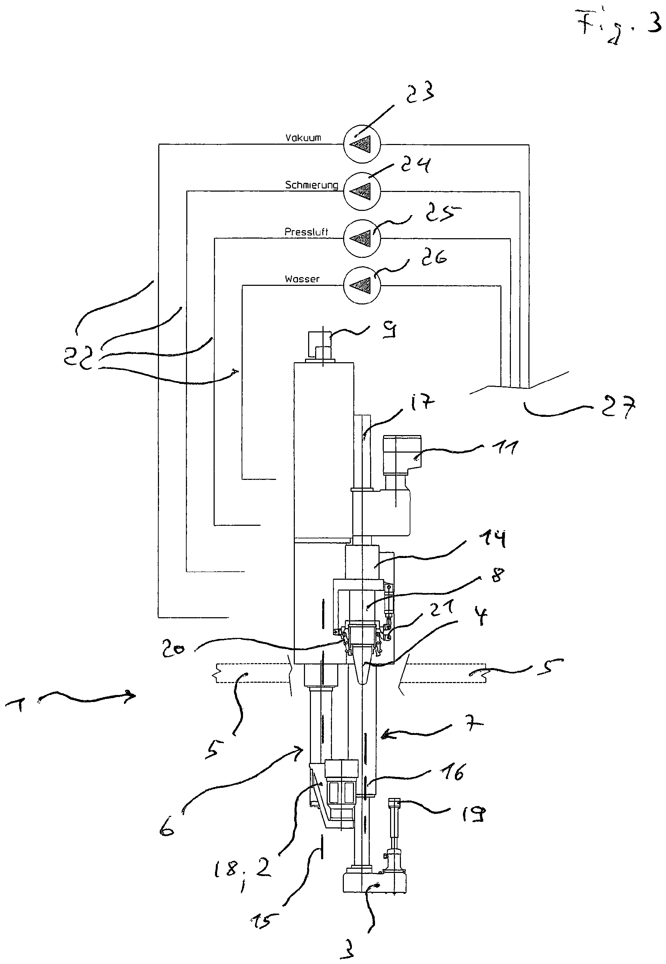

Fig. 2 und Fig. 3 zeigen jeweils einen gemeinsamen Trägermechanismus 1, der an einem Segment 5 befestigt ist. Der Trägermechanismus 1 umfasst einen Vorformträgermechanismus 6 zur Betätigung eines Vorform-Trägers 2. Darüber hinaus umfasst der Trägermechanismus 1 einen Bodenträgermechanismus 7 zur Betätigung des Boden-Trägers 3 sowie einen Plungermechanismus 8. Mithilfe des Plungermechanismus 8 wird der Plunger 4 in die Öffnung einer Vorform hereingefahren und wieder heraus bewegt.

Der Vorform-, der Bodenträger- und der Plungermechanismus 6; 7; 8 werden jeweils über einen separaten Servoantrieb 9; 10; 11 angetrieben. Die Servoantriebe 9; 10; 11 sind relativ zu dem Segment 5 jeweils auf der Oberseite der Gehäuse 12; 13; 14 angeordnet, die jeweils die Hauptachsen 15; 16 des Vorform-Trägers 2 bzw. des Boden-Trägers 3 sowie die Zahnstange 17 des Plungers 4 führen. Der Servoantrieb 9 des Vorformträgermechanismus 6 bewegt die Hauptachse 15 des Vorformträgermechanismus 6 axial innerhalb des Gehäuses 12. Zusätzlich verschwenkt der Servoantrieb 9 den Vorform-Träger 2 um eine durch die Hauptachse 15 des Vorformträgermechanismus 6 verlaufende Schwenkachse.

An dem unteren Ende der Hauptachse 15 ist ein Vorform-Träger 2 angeordnet, der die Vorform 18 schwenkbar trägt. Die Vorform 18 erstreckt sich dabei im Wesentlichen achsparallel zur Hauptachse 15.

Der Bodenträgermechanismus 7 verfügt über einen Servoantrieb 10, der die Hauptachse 16 des Bodenträgermechanismus 7 axial innerhalb des Gehäuses 13 des Bodenträgermechanismus 7 bewegt. Der Boden-Träger 3 führt einem nicht gezeigten Kölbel, den den Kölbel unterstützenden Boden 19 zu. Der Boden-Träger 3 ist zur Bewegung des Bodens 19 um eine, durch die Hauptachse 16 des Bodenträgermechanismus 7 verlaufende Schwenkachse schwenkbar. Die jeweiligen Servoantriebe 10 des Bodenträgermechanismus 7, des Vorformträgermechanismus 6 und des Plungers 4 sind als zentrale Antriebe ausgebildet. Der Plunger 4 wird innerhalb des Plungerführungsgehäuses 14 geführt. In dem zum Plunger 4 benachbarten Bereich der Zahnstange 17 ist eine Blaseinrichtung 20 dargestellt. Mithilfe der Blaseinrichtung 20 wird zwischen dem Plunger 4 und einem nicht gezeigten Kölbel Druckluft zugeführt. An der oberen-Stirnseite des Plungers 4 ist eine nicht dargestellte Klemmung angeordnet, mit der der Plunger 4 an der unteren Verlängerung der Zahnstange 17 befestigbar ist, wobei die Klemmung die Ankopplung der Plungerkühlung beinhalten kann.

Fig. 3 zeigt einen gemeinsamen Trägermechanismus 1 entsprechend der Fig. 2, der einen Vorformträgermechanismus 6, einen Bodenträgermechanismus 7 und einen Plungermechanismus 8 umfasst. In schematischer Darstellung sind darüber hinaus Versorgungsleitungen 22 dargestellt, die den einzelnen Mechanismen 6; 7; 8 des gemeinsamen Trägermechanismus 1 mit Vakuum, Schmieröl, Pressluft und Wasser versorgen. Der Vorformträgermechanismus 6, der Bodenträgermechanismus 7 sowie der Plungermechanismus 8 sind auf dem gemeinsamen Segment 5 angeordnet. Das gemeinsame Segment 5 weist jeweils eine Pumpe 23; 24; 25; 26 auf, die den Arbeitselementen des Vorformträgermechanismus 6, des Bodenträgermechanismus 7 und des Plungermechanismus 8 die erforderlichen Medien Vakuum, Schmieröl, Pressluft und Wasser bereitstellen. Die Versorgungsleitungen 22 stehen mit den jeweiligen Pumpen 23; 24; 25; 26 in Verbindung. Die genannten Pumpen 23; 24; 25; 26 saugen die Medien z.B. Vakuum, Schmieröl, Pressluft, Wasser aus jeweils zugehörigen Versorgungseinrichtungen 27 an.

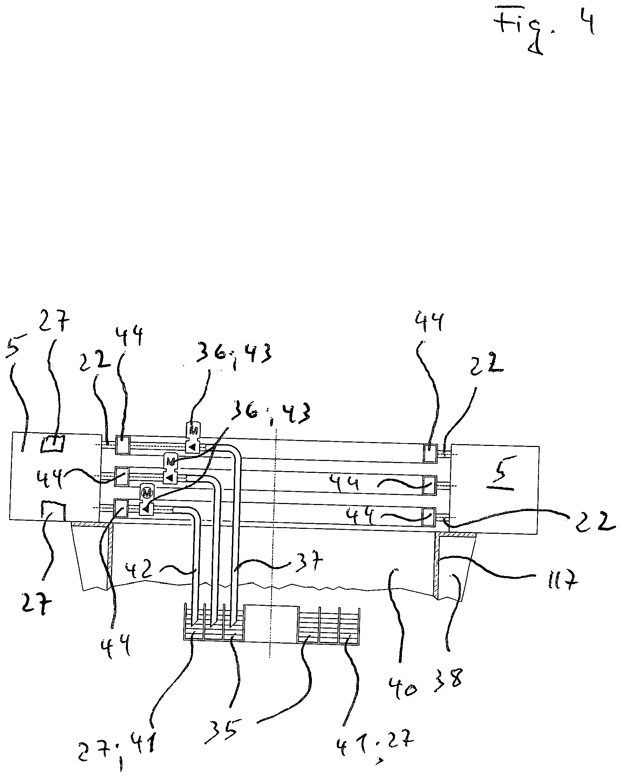

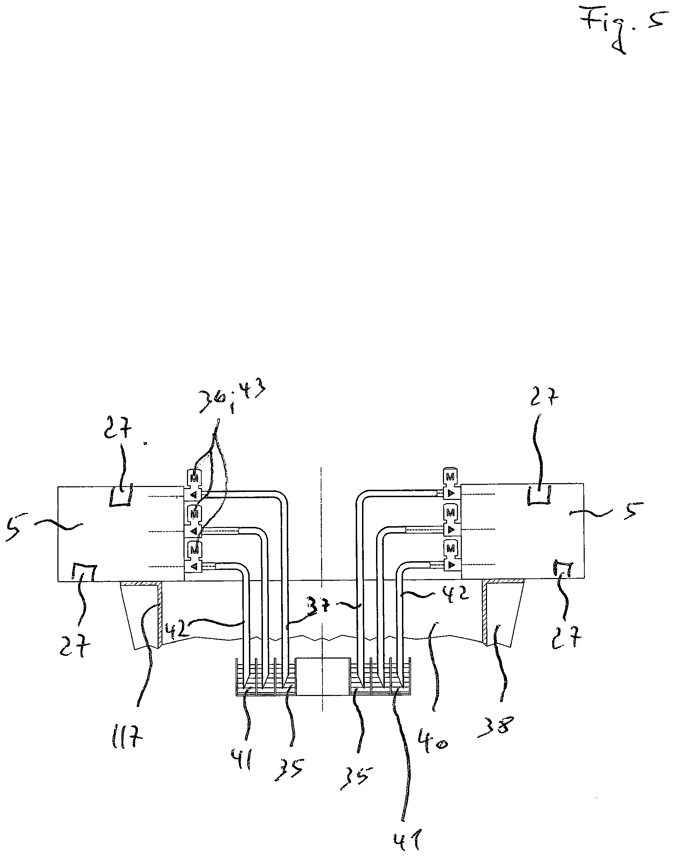

Fig. 4 und 5 zeigen jeweils ein Karussell 38, das über Kugellager um seine Achse drehbar auf einem Fundament 40 gelagert ist. Am Fuß des Karussells 38 ist geschnitten je ein Ringkanal 35; 41 dargestellt. Der Ringkanal 35 kann beispielsweise der Versorgungseinrichtung 27 Wasser zuführen, wogegen der Ringkanal 41 die Versorgungseinrichtung 27 mit Schmieröl versorgt. Die Ringkanäle 35; 41 sind jeweils über getrennte Saugleitungen 37; 42 mit Pumpen 36; 43 verbunden. Etwa in der Höhe, in der der jeweilige Verbraucher am Karussell 38 angeordnet ist, sind am Karussell 38 Ringverteiler 44 vorgesehen. Die Ringverteiler 44 verlaufen in etwa achsparallel zum Fundament 40. Jedem Medium ist dabei ein Ringverteiler 44 zugeordnet. Dem jeweiligen Ringverteiler 44 wird von der Saugleitung 37; 42 das zugehörige Medium zugeführt.

Die Pumpe 36; 43 ist in Fig. 4 zwischen der Saugleitung 37; 42 und dem Ringverteiler 44 angeordnet. In diesem Beispiel versorgt jeweils eine (Kühlwasser-) Pumpe 36; 43 einen gemeinsamen Ringverteiler 44 mit Kühlwasser. Vom gemeinsamen Ringverteiler 44 werden die auf den jeweiligen Segmenten 5 angeordneten Verbraucher zum Beispiel Arbeitselemente über Versorgungsleitungen 22 mit Kühlwasser versorgt. Unabhängig von der Anzahl der Segmente 5, die auf dem Karussell 38 angeordnet sind ist zur Versorgung der Verbraucher mit Kühlwasser jeweils nur eine Pumpe 36; 43 erforderlich.

Unabhängig von der Darstellung in Fig. 4 kann die Pumpe 36; 43 auch zwischen dem Ringverteiler 44 und dem Segment 5 angeordnet sein. Die Pumpe 36; 43 sitzt dabei in einer Versorgungsleitung 22, die vom Ringverteiler 44 im vorliegenden Beispiel mit Kühlwasser gespeist wird. Das Kühlwasser wird dabei dem auf dem betreffenden Segment 5 angeordneten Verbraucher durch die Versorgungsleitung 22 zuführt. Im letztgenannten Beispiel richtet sich die Anzahl der Pumpen 36; 43 nach der Anzahl der auf dem Karussell 38 angeordneten Segmente 5.

Die vorstehend genannten und auf Kühlwasser bezogenen Alternativen zur Versorgung der Verbraucher sind nur beispielhaft und in keiner Weise ausschließlich gemeint. Die Alternativen sind selbstverständlich auf alle fluiden Medien anwendbar.

Überdies sind die Alternativen auch auf Kompressoren anwendbar, die z.B. zur Bereitstellung von Kühlluft oder Vakuum dienen.
Erfindungsgemäß kann je Medium wenigstens eine Versorgungseinrichtung 27 vorgesehen sein. Je Segment 5 ist wenigstens eine Versorgungseinrichtung 27 angeordnet.

Für jedes Medium, das der Versorgungseinrichtung 27 mithilfe einer Pumpe 36; 43 zugeführt werden kann ist in den Fig. 4 und 5 jeweils ein Ringkanal 35; 41 vorgesehen. In der Fig. 4 und 5 ist unterhalb der Grundplatte 117 ist im Bereich des Fußes des Karussells 38 ein solcher Ringkanal 35; 41 dargestellt. Die Pumpe 36; 43 führt das jeweilige Medium über eine Saugleitung 37; 42 den Versorgungsleitung 22 zu, die das jeweilige Medium innerhalb der Vorrichtung dem Verbraucher zuführen.
Fig. 5 zeigt ein Karussell, bei dem eine Pumpe 36; 43 je Segment 5 und je Medium angeordnet ist. Bei der in Fig. 5 dargestellten Versorgungseinrichtung 17 sind keine Ringverteiler 44 vorgesehen. Je Segment und je Medium ist je eine getrennte Pumpe vorgesehen.

### Bezugsziffern

- 1: Trägermechanismus
- 5: Segment
- 6: Vorformträgermechanismus
- 2: Vorform-Träger
- 7: Bodenträgermechanismus
- 3: Boden-Träger
- 8: Plungermechanismus
- 4: Plunger
- 9, 10, 11: Servoantrieb
- 12, 13, 14: Gehäuse
- 15, 16: Hauptachse
- 17: Zahnstange
- 18: Vorform
- 19: Boden
- 20: Blaseinrichtung
- 22: Versorgungsleitung
- 23, 24, 25, 26: Pumpe
- 27: Versorgungseinrichtung
- 35; 41: Ringkanal
- 36; 43: Pumpe
- 37; 42: Saugleitung
- 38: Karussell
- 40: Fundament
- 41: Mittelsäule
- 44: Ringverteiler
- 122: Drehübertrager
- 119: Wasser
- 118; 120: Druckluft
- 113: Gebläseluft
- 117: Grundplatte
- 121: Verteilerrohr
- 115: Schaltschrank
- 114: Schleifringübertrager
- 116: Bedienelemente
- 121: Medienverteilerrohr

## Patentansprüche

1. Vorrichtung, die zur Herstellung von Hohlkörpern aus einer Glasschmelze wenigstens ein der Formung des Hohlkörpers dienendes Segment (5) als Teil eines Karussells, wenigstens ein Arbeitselement und wenigstens eine Versorgungseinrichtung (27) aufweist, **dadurch gekennzeichnet, dass** das wenigstens eine Segment (5) und/oder das wenigstens eine Arbeitselement von wenigstens einer sich mit der Grundplatte (117) drehenden Versorgungseinrichtung (27) versorgt wird und dass das Segment (5) als Trägerstruktur für eines oder mehrere der Arbeitselemente Vorform (18), Presseinrichtung, Blaseinrichtung, kombinierte Press-Blaseinrichtung, Neckring, Plunger (4), Bodenstation, Fertigform oder Roboter sowie für die Versorgungseinrichtung (27) ausgebildet ist, wobei die Versorgungseinrichtung zur Bereitstellung von Wasser und/oder Vakuum und/oder Kühlluft und/oder Pressluft und/oder Strom vorgesehen ist.

2. Vorrichtung, die zur Herstellung von Hohlkörpern aus einer Glasschmelze wenigstens ein der Formung des Hohlkörpers dienendes Segment (5) als Teil eines Karussells, welches über Kugellager um seine Achse drehbar auf einem Fundament (40) gelagert ist, wenigstens ein Arbeitselement und wenigstens eine Versorgungseinrichtung (27) aufweist, **dadurch gekennzeichnet, dass** das wenigstens eine Segment (5) und/oder das wenigstens eine Arbeitselement von wenigstens einer sich mit der Grundplatte (117) drehenden Versorgungseinrichtung (27) versorgt wird und dass das Segment (5) als Trägerstruktur für eines oder mehrere der Arbeitselemente Vorform (18), Presseinrichtung, Blaseinrichtung, kombinierte Press-Blaseinrichtung, Neckring, Plunger (4), Bodenstation, Fertigform oder Roboter ausgebildet ist, wobei die Versorgungseinrichtung zur Bereitstellung von Medien, nämlich Wasser und/oder Vakuum und/oder Kühlluft und/oder Pressluft vorgesehen ist und jedes Medium der Versorgungseinrichtung (27) mit Hilfe einer Pumpe (36, 43) zugeführt wird und hierfür jeweils ein Ringkanal (35, 41) vorgesehen ist und wobei jedem Medium ein Ringverteiler (44) zugeordnet ist, welcher etwa in der Höhe vorgesehen ist, in der das jeweilige Segment und/oder Arbeitselement am Karussel angeordnet ist und welcher in etwa achsparallel zum Fundament (40) verläuft, und wobei dem Ringverteiler (44) über jeweils getrennte Saugleitungen (37, 42) das zugehörige Medium zugeführt wird.

3. Vorrichtung nach Anspruch 1 oder 2, **dadurch gekennzeichnet, dass** die Versorgungseinrichtung (27) zur Bereitstellung von Medien, insbesondere Elektrizität und/oder Wasser und/oder Vakuum und/oder Kühlluft und/oder Pressluft und/oder Schmieröl ausgebildet ist und eine Schmierölpumpe (23) und/oder eine zur Wasserförderung an einen ortsfesten Ringkanal angeschlossene Pumpe (23; 24; 25; 26) ist und/oder Pressluft und/oder Vakuum und/oder Kühlluft erzeugt.

4. Vorrichtung nach Anspruch 1 oder 2, **dadurch gekennzeichnet, dass** an dem Segment (5) ein Trägermechanismus (1) befestigt ist, der einen Vorformträgermechanismus (6) zur Betätigung eines Vorform-Trägers (2), einen Bodenträgermechanismus (7) zur Betätigung eines Boden-Trägers (3) und einen Plungermechanismus (8) zum Hineinbewegen eines Plungers (4) in die Öffnung einer Vorform und aus dieser heraus aufweist.

5. Vorrichtung nach Anspruch 4, **dadurch gekennzeichnet, dass** der wenigstens eine, wenigstens einen Antrieb aufweisende Trägermechanismus (6; 7; 8; 1), mittels eines Trägers (2) eine Vorform (18), die der Aufnahme eines Tropfens einer Glasschmelze dient, zwischen wenigstens zwei Arbeitspositionen bewegt, wobei der wenigstens eine Antrieb des Trägermechanismus (6) wenigstens ein Servoantrieb (9; 10; 11) ist und/oder am Trägermechanismus (6) zur Führung des Trägers (2) wenigstens eine rollende Zentrierung vorgesehen ist.

6. Vorrichtung nach Anspruch 4, **dadurch gekennzeichnet, dass** wenigstens ein, wenigstens einen Antrieb (9; 10; 11) aufweisender Trägermechanismus (7), mittels eines Trägers (3) der Zuführung eines einen Kölbel unterstützenden Bodens (19) dient, wobei der wenigstens eine Antrieb (9; 10; 11) des Trägermechanismus (7) wenigstens ein Servoantrieb (9; 10; 11) ist und/oder dass zur Führung des Trägers (2; 3) wenigstens eine rollende Zentrierung vorgesehen ist.

7. Vorrichtung nach einem oder mehreren der Ansprüche 4 und 5 und 6, **dadurch gekennzeichnet, dass** der Trägermechanismus (6; 7; 8) ein Roboter ist, wobei der Roboter elektronisch an einen Hauptantrieb der Herstellungsmaschine gekoppelt ist.

8. Vorrichtung nach einem oder mehreren der vorhergehenden Ansprüche, **dadurch gekennzeichnet, dass** zur Kühlung der Arbeitselemente Gebläseluft und/oder Pressluft und/oder Wasser verwendbar ist.

9. Vorrichtung nach Anspruch 4 **dadurch gekennzeichnet, dass** wenigstens ein Plunger (4) und wenigstens ein Plungerantrieb (10) vorgesehen sind, wobei der Antrieb als Servoantrieb (10) ausgebildet ist und/oder ein den Kölbel aufnehmender Neckring und wenigstens ein Antrieb (9; 10; 11) vorgesehen sind, wobei der Antrieb (9; 10; 11) als Servoantrieb (9; 10; 11) ausgebildet ist.

10. Vorrichtung nach einem oder mehreren der Ansprüche 5, 6, 9, **dadurch gekennzeichnet, dass** der Servoantrieb (9; 10; 11) ein servoelektrischer Antrieb (9; 10; 11) und ein dezentraler Antrieb (9; 10; 11) oder ein Torquemotor und/oder ein Linearmotor oder ein Kurbelantrieb, ein Motor mit Ritzel-Zahnstange oder ein Kniehebel-, oder ein Kurvenscheibenantrieb oder ein Zahnriemen- und/oder Ketten- und/oder ein Zahnradantrieb und/oder eine Gewindespindel / Gewindemutter-Kombination ist.

11. Vorrichtung nach einem oder mehreren der Ansprüche 5, 6; 9; 10, **dadurch gekennzeichnet, dass** der Servoantrieb (9; 10; 11) ein servopneumatischer und/oder servohydraulischer Antrieb (9; 10; 11) und/oder ein synchronisierbarer Antrieb (9; 10; 11) ist.

12. Vorrichtung nach den Ansprüchen 1 oder2, **dadurch gekennzeichnet, dass** der Plunger (4) mithilfe einer automatischen Klemmung am Plungermechanismus (8) befestigt sein kann.

13. Vorrichtung nach den Ansprüchen 1 oder2, **dadurch gekennzeichnet, dass** der Neckring mittels eines Servoantriebs (9; 10; 11) drehbar ist und/oder dass die servoangetriebene Neckringdrehung bei der Formung des Kölbels, bei der drehenden oder feststehenden Formung des Hohlkörpers und/oder bei der Entnahme des Hohlkörpers eine definierte Position einnehmen kann.

14. Vorrichtung nach den Ansprüchen 1 oder2, **dadurch gekennzeichnet, dass** wenigstens zwei Arbeitselemente wenigstens einen gemeinsamen Servoantrieb (9; 10; 11) aufweisen.

## Claims

1. Device which has, for the production of hollow bodies from a glass melt, at least one segment (5) serving to mold the hollow body as part of a rotary indexing table, at least one working element and at least one supply device (27), **characterized in that** the at least one segment (5) and/or the at least one working element are supplied by at least one supply device (27) rotating together with the base plate (117), and **in that** the segment (5) is configured in the form of a support structure for one or more of the working elements being a blank mold (18), a pressing device, a blowing device, a combined press-and-blow device, a neck ring, a plunger (4), a ground station, a finishing mold or a robot as well as for the supply device (27), wherein the supply device is designed to provide water and/or a vacuum and/or cooling air and/or compressed air and/or electricity.

2. Device which has, for the production of hollow bodies from a glass melt, at least one segment (5) serving to mold the hollow body as part of a rotary indexing table being mounted on a foundation (40) and pivoted about its axis by means of ball bearings, at least one working element and at least one supply device (27), **characterized in that** the at least one segment (5) and/or the at least one working element are supplied by at least one supply device (27) rotating together with the base plate (117), and **in that** the segment (5) is configured in the form of a support structure for one or more of the working elements being a blank mold (18), a pressing device, a blowing device, a combined press-and-blow device, a neck ring, a plunger (4), a ground station, a finishing mold or a robot, wherein the supply device is designed to provide media, namely water and/or a vacuum and/or cooling air and/or compressed air, and each medium is supplied to the supply device (27) by means of a pump (36, 43), and a ring channel (35, 41) is in each case provided for this purpose, and wherein each medium is assigned a ring distributor (44), which is provided approximately at the level at which the respective segment and/or working element is arranged on the rotary indexing table, and which runs approximately axially parallel to the foundation (40), and wherein the associated medium is supplied to the ring distributor (44) via suction lines (37, 42) being separate in each case.

3. Device according to claim 1 or 2, **characterized in that** the supply device (27) is configured to provide media, in particular electricity and/or water and/or a vacuum and/or cooling air and/or compressed air and/or lubricating oil, and is a lubricating oil pump and/or a pump (23; 24; 25; 26) connected to a stationary ring channel for water pumping and/or generates compressed air and/or a vacuum and/or cooling air.

4. Device according to claim 1 or 2, **characterized in that** there is attached to the segment (5) a carrier mechanism (1) having a blank mold carrier mechanism (6) for operating a blank mold carrier (2), a base carrier mechanism (7) for operating a base carrier (3), and a plunger mechanism (8) for moving a plunger (4) into and out of the opening of a blank mold.

5. Device according to claim 4, **characterized in that** the at least one carrier mechanism (6; 7; 8; 1) having at least one drive moves a blank mold (18) serving to receive a gob of a glass melt between at least two operating positions by means of a carrier (2), wherein the at least one drive of the carrier mechanism (6) is at least one servo drive (9; 10; 11) and/or at least one rolling centering device is provided on the carrier mechanism (6) for guiding the carrier (2).

6. Device according to claim 4, **characterized in that** at least one carrier mechanism (7) having at least one drive (9; 10; 11) serves to carry a base (19) supporting a parison by means of a carrier (3), wherein the at least one drive (9; 10; 11) of the carrier mechanism (7) is at least one servo drive (9; 10; 11) and/or that at least one rolling centering device is provided for guiding the carrier (2; 3).

7. Device according to one or more of claims 4 and 5 and 6, **characterized in that** the carrier mechanism (6; 7; 8) is a robot, wherein the robot is electronically coupled to a main drive of the production machine.

8. Device according to one or more of the preceding claims, **characterized in that** fan air and/or compressed air and/or water can be used for cooling the working elements.

9. Device according to claim 4, **characterized in that** at least one plunger (4) and at least one plunger drive (10) are provided, wherein the drive is configured in the form of a servo drive (10) and/or a neck ring receiving the parison and at least one drive (9; 10; 11) are provided, wherein the drive (9; 10; 11) is configured in the form of a servo drive (9; 10; 11).

10. Device according to one or more of claims 5, 6, 9, **characterized in that** the servo drive (9; 10; 11) is a is a servo-electric drive (9; 10; 11) and a decentralized drive (9; 10; 11) or a torque motor and/or a linear motor or a crank drive, a motor with a rack and pinion or a toggle lever or a cam disk drive or a toothed belt and/or a chain and/or a gear drive and/or a combination of a threaded spindle and a threaded nut.

11. Device according to one or more of claims 5, 6; 9; 10, **characterized in that** the servo drive (9; 10; 11) is a servo-pneumatic and/or servo-hydraulic drive (9; 10; 11) and/or a drive (9; 10; 11) capable of being synchronized.

12. Device according to claim 1 or 2, **characterized in that** the plunger (4) can be attached to the plunger mechanism (8) by means of an automatic clamping device.

13. Device according to claim 1 or 2, **characterized in that** the neck ring is rotatable by means of a servo drive (9; 10; 11) and/or **in that** the servo-driven neck ring rotation can assume a defined position during the molding of the parison, during the rotary or stationary molding of the hollow body and/or during the removal of the hollow body.

14. Device according to claim 1 or 2, **characterized in that** the at least two working elements have at least one common servo drive (9; 10; 11).

## Revendications

1. Dispositif qui, pour la fabrication de corps creux à partir d'un verre en fusion, présente au moins un segment (5) servant au façonnage du corps creux comme partie d'un carrousel, au moins un élément de travail et au moins un dispositif d'alimentation (27), **caractérisé en ce que** ledit au moins un segment (5) et/ou ledit au moins élément de travail est alimenté par au moins un dispositif d'alimentation (27) tournant avec une plaque de base (117) et **en ce que** le segment (5) est réalisé en tant que structure support pour un ou plusieurs des éléments de travail tels qu'une préforme (18), un dispositif de pressage, un dispositif de soufflage, un dispositif combiné de pressage-soufflage, une bague de col, un piston plongeur (4), une station au sol, un moule de finition ou un robot ainsi que pour le dispositif d'alimentation (27), le dispositif d'alimentation étant prévu pour fournir de l'eau et/ou du vide et/ou de l'air de refroidissement et/ou de l'air comprimé et/ou du courant.

2. Dispositif qui, pour la fabrication de corps creux à partir d'un verre en fusion, présente au moins un segment (5) servant au façonnage du corps creux comme partie d'un carrousel qui est monté rotatif autour de son axe au moyen d'un roulement à billes sur une fondation (40), au moins un élément de travail et au moins un dispositif d'alimentation (27), **caractérisé en ce que** ledit au moins un segment (5) et/ou ledit au moins un élément de travail est alimenté par au moins un dispositif d'alimentation (27) tournant avec la plaque de base (117) et **en ce que** le segment (5) est réalisé en tant que structure support pour un ou plusieurs des éléments de travail tels qu'une préforme (18), un dispositif de pressage, un dispositif de soufflage, un dispositif combiné de pressage-soufflage, une bague de col, un piston plongeur (4), une station au sol, un moule de finition ou un robot, le dispositif d'alimentation étant prévu pour fournir des médias, à savoir de l'eau et/ou du vide et/ou de l'air de refroidissement et/ou de l'air comprimé, et chaque médium étant amené au dispositif d'alimentation (27) à l'aide d'une pompe (36, 43), et dans ce but étant prévu un canal annulaire (35, 41) respectif, et à chaque médium étant associé un distributeur annulaire (44) qui est prévu approximativement au niveau auquel le segment et/ou l'élément de travail respectif est agencé sur le carrousel et qui s'étend approximativement parallèlement à l'axe par rapport à la fondation (40), et le médium associé étant amené au distributeur annulaire (44) par des tuyaux d'aspiration (37, 42) respectivement séparés.

3. Dispositif selon les revendications 1 ou 2, **caractérisé en ce que** le dispositif d'alimentation (27) est réalisé pour fournir des médias, en particulier de l'électricité et/ou de l'eau et/ou du vide et/ou de l'air de refroidissement et/ou de l'air comprimé et/ou de l'huile de lubrification et **en ce qu'**il est une pompe à huile et/ou une pompe (23 ; 24 ; 25; 26;) branchée à un canal annulaire stationnaire pour l'apport d'eau, et/ou **en ce qu'**il engendre de l'air comprimé et/ou du vide et/ou de l'air de refroidissement.

4. Dispositif selon les revendications 1 ou 2, **caractérisé en ce qu'**au segment (5) est fixé un mécanisme support (1) qui présente un mécanisme support de préforme (6) pour actionner un support de préforme (2), un mécanisme support au sol (7) pour actionner un support au sol (3) et un mécanisme plongeur (8) pour faire rentrer un piston plongeur (4) dans l'ouverture d'une préforme et pour le faire sortir de celle-ci.

5. Dispositif selon la revendication 4, **caractérisé en ce que** ledit au moins un mécanisme support (6 ; 7 ; 8 ; 1) présentant au moins un entraînement déplace à l'aide d'un support entre au moins deux positions de travail une préforme (18) qui sert à la réception d'une goutte d'un verre en fusion, ledit au moins un entraînement du mécanisme support (6) étant au moins un entraînement asservi (9 ; 10 ; 11) et/ou au moins un dispositif de centrage roulant étant prévu sur le mécanisme support (6) pour guider le support (2).

6. Dispositif selon la revendication 4, **caractérisé en ce qu'**au moins un mécanisme support (7) présentant au moins un entraînement (9 ; 10 ; 11) sert, au moyen d'un support (3), à l'amenée d'un fond soutenant une paraison, ledit au moins un entraînement (9 ; 10 ; 11) du mécanisme support (7) étant au moins un entraînement asservi (9 ; 10 ; 11) **en ce qu'**au moins un dispositif de centrage roulant est prévu pour le guidage du support (2 ; 3).

7. Dispositif selon l'une ou plusieurs des revendications 4 et 5 et 6, **caractérisé en ce que** le mécanisme support (6 ; 7 ; 8) est un robot, le robot étant accouplé électroniquement à un entraînement principal de la machine de fabrication.

8. Dispositif selon l'une ou plusieurs des revendications précédentes, **caractérisé en ce que** pour le refroidissement des éléments de travail, on peut utiliser de l'air de soufflage et/ou de l'air comprimé et/ou de l'eau.

9. Dispositif selon la revendication 4, **caractérisé en ce qu'**il est prévu au moins un piston plongeur (4) et au moins un entraînement de piston plongeur (10), l'entraînement étant réalisé sous forme d'entraînement asservi (10) et/ou **en ce qu'**il est prévu une bague de col recevant la paraison et au moins un entraînement (9 ; 10 ; 11), l'entraînement (9 ; 10 ; 11) étant réalisé sous forme d'entraînement asservi (9 ; 10 ; 11).

10. Dispositif selon l'une ou plusieurs des revendications 5, 6, 9, **caractérisé en ce que** l'entraînement asservi (9 ; 10 ; 11) est un entraînement servoélectrique (9 ; 10 ; 11) et un entraînement décentralisé (9 ; 10 ; 11) ou un moteur à couple et/ou un moteur linéaire ou un entraînement à bielle, un moteur avec crémaillère et pignon ou un entraînement à levier à genouillère ou un entraînement à disque à came ou un entraînement à courroie crantée et/ou par chaîne et/ou par roue dentée et/ou une combinaison broche filetée / écrou fileté.

11. Dispositif selon l'une ou plusieurs des revendications 5, 6, 9, 10, **caractérisé en ce que** l'entraînement asservi (9 ; 10 ; 11) est un entraînement servopneumatique (9 ; 10 ; 11) et/ou servohydraulique (9 ; 10 ; 11) et/ou un entraînement synchronisable (9 ; 10 ; 11).

12. Dispositif selon les revendications 1 ou 2, **caractérisé en ce que** le piston plongeur (4) peut être fixé sur le mécanisme plongeur (8) au moyen d'un serrage automatique.

13. Dispositif selon les revendications 1 ou 2, **caractérisé en ce que** la bague de col est rotative au moyen d'un entraînement asservi (9 ; 10 ; 11) et/ou **en ce que** la rotation de la bague de col par entraînement asservi peut prendre une position définie lors du façonnage de la paraison, lors du façonnage rotatif ou fixe du corps creux et/ou lors du retrait du corps creux.

14. Dispositif selon les revendications 1 ou 2, **caractérisé en ce qu'**au moins deux éléments de travail présentent au moins un entraînement asservi (9 ; 10 ; 11) commun.
